(19) Europäisches Patentamt
European Patent Office
Office européen des brevets

(11) EP 3 470 475 B1

(12) **EUROPÄISCHE PATENTSCHRIFT**

(45) Veröffentlichungstag und Bekanntmachung des Hinweises auf die Patenterteilung:
**27.01.2021 Patentblatt 2021/04**

(51) Int Cl.:
***C09D 5/16** (2006.01)* ***C09D 183/04** (2006.01)*
***C09D 183/06** (2006.01)* ***C09D 183/08** (2006.01)*

(21) Anmeldenummer: **18194401.8**

(22) Anmeldetag: **14.09.2018**

(54) **HÄRTBARE ZUSAMMENSETZUNG FÜR BESCHICHTUNGEN MIT ANTI-ADHÄSIVER EIGENSCHAFT**

CURABLE COMPOSITION FOR COATINGS WITH ANTI-ADHESIVE PROPERTY

COMPOSITION DURCISSABLE POUR REVÊTEMENTS À PROPRIÉTÉ ANTIADHÉSIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2017 EP 17196290**

(43) Veröffentlichungstag der Anmeldung:
**17.04.2019 Patentblatt 2019/16**

(73) Patentinhaber: **Evonik Operations GmbH**
**45128 Essen (DE)**

(72) Erfinder:
- **Sloot, Tim-Frederic**
  **45721 Haltern am See (DE)**
- **Fiedel, Michael**
  **45239 Essen (DE)**
- **Roland, Katrin**
  **45257 Essen (DE)**
- **Henning, Frauke**
  **45259 Essen (DE)**
- **Busch, Stefan**
  **44879 Bochum (DE)**
- **Krusenbaum, Sabine**
  **45134 Essen (DE)**
- **Redeker, Stefanie**
  **45130 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 2 159 248** **EP-A2- 0 967 253**
**WO-A1-2009/065644** **WO-A2-2009/025924**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 470 475 B1

## Beschreibung

Die Erfindung betrifft härtbare Zusammensetzungen zur Herstellung von Beschichtungen mit anti-adhäsiver Eigenschaft, deren Verwendung sowie ein Verfahren zur deren Aufbringung.

Beschichtungen werden auf Oberflächen zu dekorativen, funktionellen Zwecken oder zu Schutzzwecken aufgebracht. Dabei nimmt die Nachfrage nach Oberflächenschutz in unterschiedlichen Industriebereichen, wie Flugzeug, Automobil, Schienenfahrzeug, Schiffbau und Windenergie, stetig zu.

Bei der Funktionalisierung von Oberflächen und Beschichtungen werden verschiedene Technologien eingesetzt. Aus der Literatur ist der Ansatz der Oberflächenfunktionalisierung durch Mikro- und Nanostrukturierung von Beschichtungen, abgeleitet von der Schuppenstruktur von Haien, bekannt. Derartige Oberflächen werden bei Bauteilen von Schiffen, Flugzeugen, Rotorblättern von Windenergieanlagen oder Pipeline angewandt, um den Strömungswiderstand zu reduzieren. Auch selbstheilende Beschichtungen wurden entwickelt, bei denen eingekapselte funktionelle Wirkstoffe bei mechanischer Beschädigung des Systems freigesetzt werden und dann ihre heilende Wirkung entfalten. Diese selbstheilenden Oberflächen sind für den Korrosionsschutz interessant.

Eine weitere Entwicklung ist die Bereitstellung von Oberflächen mit verminderter Eishaftung bzw. Eisbildung, die nicht nur für die Flugzeug- und Windenergieindustrie sondern auch für den Bereich Kältetechnik von besonderem Interesse sind. Hier werden beispielsweise hochelastische Beschichtungen mit sehr niedriger Oberflächenenergie (z.B. US20060281861A1) oder Flüssigkeits-imprägnierte Beschichtungen (WO2012100099A2) eingesetzt.

Des Weiteren sind Antifouling-Beschichtungen bzw. Foul-Release-Beschichtungen bekannt, bei denen der Algen- und Muschelbewuchs von Oberflächen, die im ständigen Kontakt mit Wasser stehen, zu verhindern oder zumindest deutlich zu erschweren.
Besonders auf permanenter Bewässerung ausgesetzten Strukturen, wie z. B. bei Schiffsrümpfen, Bojen, Fischnetzen, Zug- und Abflussrohren zum Kühlen, off-shore-Bohranlagen oder Wassertanks, die dem Meerwasser und/oder Süßwasser ausgesetzt sind, verursacht das Anhaften und das Wachstum von Organismen (Bio-Fouling) beträchtliche ökonomische Verluste. Diese resultieren im Falle von Schiffen z.B. aus der erhöhten Reibung und damit einhergehend des erhöhten Treibstoffverbrauchs. Auch erleiden Oberflächen durch den erhöhten Widerstand gegenüber Wellen oder Strömungen bei statischen Strukturen mechanischen Schaden, was zu kürzeren Wartungszyklen führt und somit auch zur verringerten Betriebszeit.

Aus dem Stand der Technik sind biofilmverhindernde Beschichtungen in technischen Wassersystemen und Produktion unter Verwendung von bioziden Wirkstoffen bekannt.

Aus dem Stand der Technik sind Oberflächenbeschichtungen bekannt, deren Oberfläche selbstpolierende Eigenschaften aufweist. Die selbstpolierende Eigenschaft lässt sich u.a. durch den Einsatz von degradierbaren Polymerbeschichtungen erreichen, welche durch ihr kontinuierliches Abbauverhalten die Oberfläche stets erneuern. Eine derartige Polymereigenschaft kann dazu führen, dass Anschmutzungen verschiedenster Art mitabgelöst werden und so die Oberfläche frei von Schmutz sowie Unebenheiten bleibt.

In Kombination mit Substanzen, wie Kupferoxid, TBT und anderen Bioziden, konnten die Wirksamkeit dieser Beschichtungen verstärkt werden, beschrieben in EP 0 646 630, EP 0 802 243. Jedoch ist die Verwendung von Bioziden durch immer strengeren Richtlinien Grenzen aufgesetzt.

Foul-Release Beschichtungen basieren oft auf Polysiloxanen oder Silikon-Elastomeren. Der Wirkmechanismus ist die Ausbildung einer Antihaft-Oberfläche, auf der Wasserorganismen nicht anhaften können oder die Haftkräfte so niedrig sind, dass sie durch die Bewegung im Wasser abgelöst werden.

Es ist daher bekannt, Beschichtungen Polysiloxane zuzusetzen, um bestimmte Eigenschaften zu erzielen. Der Einsatz der Polysiloxane ist weit gestreut und sehr vielschichtig. Auch Polyhydroxyfunktionelle Polysiloxane sind im Prinzip aus zahlreichen Patentschriften bekannt. Beispielsweise ist aus der US 2008/0213599 und WO 2009/025924 die Verwendung von linearen Polyorganosiloxanen in Beschichtungen auf Basis von Polyurethanen bekannt. Die linearen Polysiloxane werden in WO 2009/025924 mit dendritischen Polyethern umgesetzt, so dass "star-like" Strukturen erhalten werden, wobei die linearen Polysiloxane strahlenartig an dem Polyether verbunden sind. Die mit solchen Strukturen hergestellten Beschichtungen weisen jedoch eine geringe Härte auf, so dass derartige Beschichtungen bei mechanischer Belastung nicht beständig sind.

Das Dokument EP 2 159 248 offenbart Polymere, die organomodifiziert werden können und dann der vorliegenden Formel (I) entsprechen.

Somit sind aus dem Stand der Technik zahlreiche verschiedene Beschichtungsformulierungen entwickelt worden, die für eine bestimmte Schutzfunktion, für eine bestimmte BindemittelKomponente und ggf. für eine bestimmte Vernetzer-Komponente bestimmt sind. Diese sind demnach maßgeschneidert mit einer oder zwei Oberflächenfunktionen.

Der vorliegenden Erfindung lag daher die Aufgabe zugrunde, eine Zusammensetzung bereitzustellen, die eine verbesserte anti-adhäsive Wirkung aufweisen, wobei sie in verschiedenen Beschichtungen einsetzbar ist, ohne dass die übrigen Eigenschaften signifikant beeinträchtigt werden.

Überraschenderweise wurde gefunden, dass mit einer härtbaren Zusammensetzung enthaltend mindestens ein filmbildendes Polymer und mindestens ein organomodifiziertes, verzweigtes Siloxan der Formel (I)

$$M_a M'_{a1} D_b D'_{b1} T_c Qd \qquad \text{Formel (I)}$$

mit

M = $(R^1{}_3SiO_{1/2})$
M' = $(R^2R^1{}_2SiO_{1/2})$
D = $(R^1{}_2SiO_{2/2})$
D' = $(R^2R^1SiO_{2/2})$
T = $(R^3SiO_{3/2})$
Q = $(SiO_{4/2})$
a = 0 bis 30, bevorzugt 0 bis 12
a1 = 0 bis 30, bevorzugt 0 bis 12, mit der Maßgabe, dass a + a1 > 2,
b = 10 bis 1000, bevorzugt 30 bis 900, insbesondere 50 bis 800;
b1 = 0 bis 30, bevorzugt 1 bis 15, mit der Maßgabe, dass a1 + b1 > 0,
c = 0 bis 30, bevorzugt 0 bis 20,
d = 0 bis 15, bevorzugt 0 bis 12, mit der Maßgabe dass, c + d >= 1,
$R^1$ = unabhängig voneinander gleiche oder verschiedene lineare oder verzweigte, gegebenenfalls aromatische Kohlenwasserstoffreste mit 1 bis 30 Kohlenstoffatomen, bevorzugt Methyl, Ethyl, Phenyl, Dodecyl oder Hexadecyl insbesondere Methyl,
$R^2$ = unabhängig voneinander gleiche oder verschiedene organische Alkyl-, Polyether-, Hydroxy-, Amin-, Carboxy-, Alkoxy, Epoxy-, Alkylalkoxysilylalkyl- oder Alkoxysilylalkyl-Reste,
$R^3$ = R1 oder R2, bevorzugt Methyl-, Phenyl- oder Alkoxyreste, insbesondere Methylreste.

oder Mischungen davon,

Beschichtungen hergestellt werden können, die eine anti-adhäsive Eigenschaft aufweisen.

Unter dem Begriff "anti-adhäsive Eigenschaft" wird die Eigenschaft von Beschichtungen verstanden, die das Anhaften von Schmutz jeglicher Art verhindern oder zumindest reduzieren.

Bei Schmutz handelt es sich im Sinne der vorliegenden Erfindung um alle Arten unerwünschter Kontamination von Oberflächen mit festen und/oder flüssigen Stoffen, organischen und/oder anorganischen Stoffen. Beispiele von Schmutz umfassen Fette, Öle, Eiweiße, Lebensmittel, Staub oder Erde, aber auch Eis, Bio-fouling, Algen, Mikroorganismen, Graffiti, Ruß, färbende Flüssigkeiten wie Rotwein, Sonnencreme.

Es wurde in den Versuchen festgestellt, dass die mit der erfindungsgemäßen härtbaren Zusammensetzung hergestellten Beschichtungen Schmutzanhaftungen jeglicher Art verhindern oder reduzieren und zeigen keine Beeinträchtigung sonstiger Eigenschaften auf.

Die in der erfindungsgemäßen härtbaren Zusammensetzung enthaltenen Siloxane der Formel (I) können vorzugsweise dadurch erhalten werden, dass zunächst flüssige (betrachtet bei einer Temperatur von 25 °C und einem Druck von 101325 Pa), verzweigte SiH-funktionelle Siloxane hergestellt werden, in dem zunächst eine Mischung, enthaltend

a) ein oder mehrere SiH-funktionelle Siloxane,
b) ein oder mehrere SiH-Funktion-freie Siloxane und
c) ein oder mehrere Tetraalkoxysilane
und/oder
d) ein oder mehrere Trialkoxysilane

unter Zugabe von Wasser und in Anwesenheit von mindestens einem festen Brönstedt-sauren Katalysator, welcher ausgewählt ist aus den sauren Ionenaustauschern, in einem Verfahrensschritt umgesetzt wird. Die Umsetzung kann in Anlehnung an das in EP 2 159 248 B1 oder EP 2 176 319 B1 beschriebene Verfahren erfolgen. Auf die genannten Dokumente wird ausdrücklich verwiesen.

Das Verfahren muss dabei so durchgeführt werden, dass die Umsetzung nicht vollständig ist, so dass verzweigte Siloxan-Produkte erhalten werden, die noch Alkoxygruppen aufweisen. Dies kann z. B. dadurch erreicht werden, dass die Umsetzung vor Erreichen des vollständigen Umsatzes abgebrochen wird, oder dass die Einsatzstoffe in unterstöchiometrischen Verhältnissen eingesetzt werden, so dass nicht alle Alkoxygruppen der Alkoxysilane umgesetzt werden können. Insbesondere wird ein molares Verhältnis von Wasser zu Alkoxygruppen von kleiner 1 zu 1 verwendet, besonders bevorzugt ist ein molares Verhältnis von Wasser zu Alkoxygruppen von kleiner 0,5 zu 1.

Das bevorzugte Verfahren verzichtet vorzugsweise vollständig auf die Gegenwart von Lösungsmitteln, die mit Wasser in gleichen Gewichtsteilen nicht ohne Phasentrennung mischbar sind. Insbesondere werden in dem Verfahren keine Alkane oder aromatische Verbindungen als Lösungsmittel eingesetzt.

Es kann vorteilhaft sein, wenn in dem Verfahren statt Wasser eine Mischung aus Wasser und einem oder mehreren, mit Wasser in gleichen Gewichtsteilen ohne Phasentrennung mischbaren organischen Lösungsmitteln zugegeben wird. Auf diese Weise kann eine bessere Kompatibilisierung und damit bessere Durchmischung des Wassers mit den Siloxanen und Silanen erreicht werden. Eine gute Durchmischung kann aber auch dadurch erreicht werden, dass das Wasser unter einer besonders guten mechanischen Durchmischung zugegeben wird oder der Mischung aus Silanen und Siloxanen in Form von Dampf zugeführt wird, z. B. durch Einperlen von Wasserdampf in die Mischung.

Als mit Wasser in gleichen Gewichtsteilen ohne Phasentrennung mischbare organische Lösungsmittel, werden vorzugsweise Alkohole, insbesondere Alkohole mit 1 bis 6 Kohlenstoffatomen, bevorzugt einwertige Alkohole und besonders bevorzugt Methanol oder Ethanol, insbesondere Ethanol eingesetzt. Vorzugsweise wird eine so große Menge dieses Lösungsmittels zugegeben, dass das Wasser ganz oder teilweise in der Reaktionsmischung homogenisiert ist. Wird eine Mischung von Wasser und einem entsprechenden Lösungsmittel, wie insbesondere Ethanol eingesetzt, beträgt das Gewichtsverhältnis von Wasser zu Lösungsmittel in dieser Mischung vorzugsweise von 1 zu 1 bis 10 zu 1, vorzugsweise 2 zu 1 bis 5 zu 1.

Bevorzugt weisen die Siloxane der Formel (I) gleiche oder verschiedene Reste $R^2$, ausgewählt aus der Gruppe

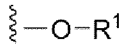 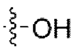 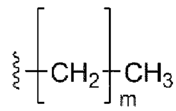 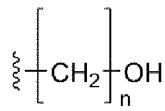

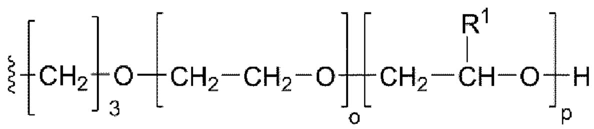 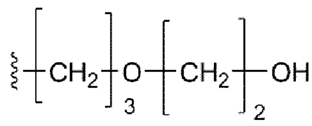

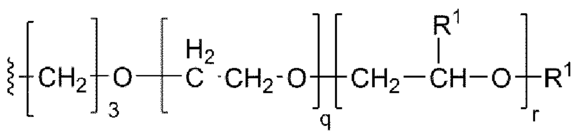 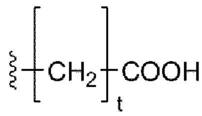

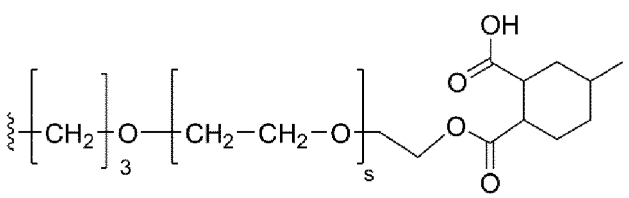 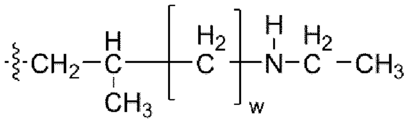

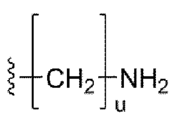 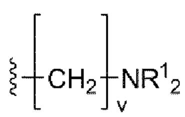 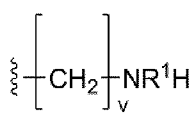 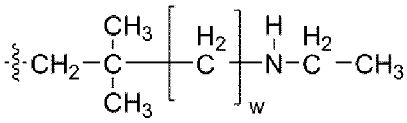

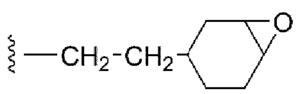 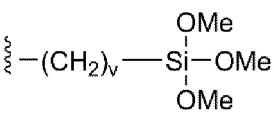

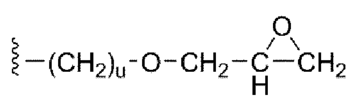 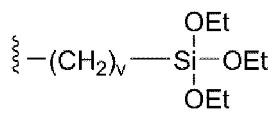

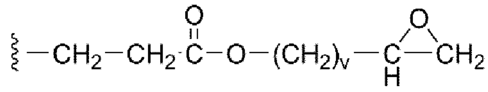

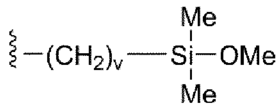

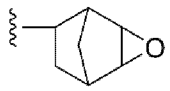

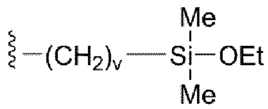

mit

m = 6 bis 20, bevorzugt 8 bis 18,
n = 2 bis 18, bevorzugt 4 bis 8,
o = 0 bis 30, bevorzugt 2 bis 20, insbesondere 5 bis 15,
p = 0 bis 30, bevorzugt 0 bis 10,
q = 0 bis 30, bevorzugt 2 bis 20, insbesondere 5 bis 15,
r = 0 bis 30, bevorzugt 0 bis 10,
s = 0 bis 10, bevorzugt 1 bis 5,
t = 1 bis 20, bevorzugt 1 bis 10,
u = 1 bis 10, bevorzugt 2 bis 4,
v = 1 bis 10, bevorzugt 2 bis 5,
w = 1 bis 6, bevorzugt 1 bis 3,

auf.

Die verschiedenen Fragmente der in der Formel (I) angegebenen Siloxanketten können statistisch verteilt sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I).

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Bei Prozentangaben handelt es sich, wenn nicht anders angegeben, um Angaben in Gewichtsprozent.

Sind nachfolgend Messwerte angegeben, so sind diese Messungen, wenn nicht anders angegeben, bei Normalbedingungen (25 °C und 1013 mbar) durchgeführt worden.

Werden nachfolgend Mittelwerte angegeben, so handelt es sich, wenn nicht anderes angegeben, um Gewichtsmittel.

Bevorzugt handelt es sich bei den Siloxanen der Formel (I) um organomodifizierte, im Siloxanteil einfach verzweigte oder mehrfachverzweigte Siloxane.

Die für die erfindungsgemäße härtbare Zusammensetzung gewählte Siloxane der Formel (I) besitzen sowohl seitenständig modifizierte Siloxane als auch $\alpha,\omega$-modifizierte Siloxane. Somit ist ein höherer Modifikationsgrad im Sinne einer größeren Anzahl an Substitutionsmöglichkeiten gegeben, im Vergleich zu rein linearen Strukturen. Hierdurch sind Strukturen mit langem ungestörten Siloxanrückgrat zugänglich, Die höhere Anzahl an funktionellen Gruppen in den Siloxanen vermag in Beschichtungen zu einer höheren Vernetzungsdichte und damit zu einer höheren Beständigkeit mit dem filmbildenden Polymer führen. Es wurde auch beobachtet, dass die Verträglichkeit mit dem filmbildenden Polymer verbessert wurde. Durch den ungestörten, verzweigten Silikonkern vermögen die mit der erfindungsgemäßen härtbaren Zusammensetzung hergestellten Beschichtungen zudem eine ausgeprägte anti-adhäsive Wirkung zu verleihen.

Vorzugsweise weisen die Siloxane der Formel (I) endständige und/oder seitenständige organische Reste, ausgewählt aus OH-Gruppen tragenden organischen Resten, Carboxylat-Gruppen, Allylglycidylethergruppen, Hydroxyethylpropylgruppen, Alkoxysilylalkylgruppen, Dodecylgruppen oder Aminoalkylgruppen, auf.

Bevorzugt handelt es sich bei den Siloxanen der Formel (I) um modifizierte einfach verzweigte (sog. mono-T- oder mono-Q-Strukturen) oder mehrfachverzweigte (sog. multi-T-oder multi-Q-Strukturen) Polysiloxane, wobei diese

mit endständigen oder seitständigen OH-Gruppentragenden organische Reste oder Carboxylat-Gruppen oder Allylglycidylethergruppen oder Hydroxyethylpropylgruppen oder Alkoxysilylalkylgruppen oder Dodecylgruppen oder Aminoalkylgruppen modifiziert sein können. Derartige Strukturen und ihre Herstellung werden z.B. in WO 2011/088937 A1, EP 2 176 319 B1 und EP 2 159 248 B1 beschrieben und können eingesetzt werden.

Unter dem mittleren Verzweigungsgrad K wird im Rahmen der vorliegenden Erfindung das Verhältnis der Anzahl von M- und M'-Einheiten zu T- und Q-Einheiten (M + M')/(T+Q) verstanden. Die Bezeichnung der Einheiten entspricht der international anerkannten Nomenklatur, wie sie z. B. auch in Thieme Römpp Online, Georg Thieme Verlag, 2008 nachzulesen ist. Die Bestimmung des Verzweigungsgrads erfolgt durch in Verhältnis setzen der Flächenintegrale der Peaks in einem 29Si-NMR-Spektrum, die den jeweiligen Einheiten zugeordnet sind.
Bevorzugt ist der mittlere Verzweigungsgrad K der Siloxane gemäß Formel (I) größer als 1, bevorzugt größer als 1,25.

Unter dem Faktor F1 wird im Rahmen der vorliegenden Erfindung die direkt aufeinander folgenden D-Einheiten (D + D')/(1+T*2+Q*3) verstanden. Sie gibt den Silikoncharakter der Siloxane gemäß Formel (I) an. Die Bestimmung von F1 erfolgt durch in Verhältnis setzen der Flächenintegrale der Peaks in einem 29Si-NMR-Spektrum, die den jeweiligen Einheiten zugeordnet sind.

Vorzugsweise weisen die Siloxane der Formel (I) eine mittlere Anzahl direkt aufeinander folgenden D-Einheiten F1 von mindestens 5, bevorzugt mindestens 10 auf.

Ebenfalls bevorzugt weisen die Siloxane nach Formel (I) ein mittleres Molekulargewicht von 2.500 - 70.000 g/Mol, bevorzugt 5.000 - 50.000 g/mol, besonders bevorzugt 7.000 - 35.000 g/mol auf.

Bevorzugt weisen die Siloxane nach Formel (I) eine Viskosität von 50 - 2000 mPa s (25°C), vorzugsweise von 100 - 1500 mPa s (25°C), besonders bevorzugt von 150 - 1000 mPa s (25°C) auf, gemessen nach DIN 53015, auf.

Die organischen endständigen oder seitständigen Modifizierungen werden bevorzugt ausgewählt aus der Gruppe der Propylglycidylethergruppen, Hydroxyethylpropylgruppen, Alkoxysilylalkylgruppen, Dodecylgruppen oder Aminopropylgruppen.

Bevorzugt enthält das filmbildende Polymer funktionelle Gruppen, welche mit einem isocyanathaltigen Härter, einem aminhaltigen Härter oder mit einem Katalysator reaktiv sind.

Vorzugsweise ist das filmbildende Polymer ausgewählt aus der Gruppe der hydroxyfunktionellen Acrylatpolymere, Polyesterpolymere, Polyurethanpolymere und/oder Polyetherpolymere, hydroxyfunktionellen Polysiloxane oder hydroxyfunktionellen fluorhaltigen Polymere, Polyoxypropylenamine, aminofunktionellen Acrylat-Polymere oder Polyesterpolymere sowie Polycarbamate, das mit einem isocyanathaltigen Härter reagiert

Typischerweise besitzen solche Polymere reaktive Hydroxy- oder Amingruppen. Besonders bevorzugt werden Polymere mit mehreren hydroxyfunktionellen Gruppen eingesetzt. Hydroxyfunktionelle Acrylate sind u.a. von der Firma Allnex unter dem Handelsnamen MACRYNAL® oder SETALUX® erhältlich. Fluorhaltige hydroxyfunktionelle filmbildende Polymere sind kommerziell erhältlich unter dem Markennamen LUMIFLON® oder FLUORAD®. Beispiele für hydroxyfunktionelle Polyester sind unter anderem kommerziell erhältlich unter dem Markennamen DESMOPHEN® oder SETAL®. Verwendbare und kommerziell erhältliche hydroxyfunktionelle Polyether sind u.a. erhältlich unter dem Markennamen TERATHANE® oder POLYMEG®.

Bevorzugt sind filmbildende aminfunktionelle Polymere, die ebenfalls zur Aushärtung mit isocyanathaltigen Härtern geeignet sind. Beispiele für kommerziell erhältliche Produkte sind u.a. Polyoxypropylenamine, erhältlich unter dem handelsnamen JEFFAMINE®. Weitere aminfunktionelle Polymere, wie z.B. aminofunktionelle Acrylat-Polymere oder Polyesterpolymere sowie Polycarbamate sind ebenfalls verwendbar und dem Fachmann bekannt.

Vorzugsweise handelt es sich bei den isocyanathaltigen Härtern um mono-, di- und/oder trifunktionelle Isocyanate.

Beispiele für isocyanathaltige Härter sind monomere Isocyanate, polymere Isocyanate und Isocyanat-Prepolymere. Polyisocyanate werden gegenüber monomeren Isocyanaten aufgrund ihrer geringeren Toxizität bevorzugt. Beispiele für Polyisocyanate sind Isocyanurate, Uretdione und Buirete basierend auf Diphenylmethan Diisocyanat (MDI), Toluol Diisocyanat (TDI), Hexamethylen Diisocyanate (HDI) and Isophoron Diisocyanat (IPDI). Beispiele für kommerziell erhältliche Produkte sind unter dem Markennamen DESMODUR® von Covestro oder VESTANAT von der Evonik Industries. Beispiele für Polyisocyanate sind DESMODUR® N3400, DESMODUR® N3300, DESMODUR® N3600 DESMODUR® N75, DESMODUR® XP2580, DESMODUR® Z4470, DESMODUR® XP2565 and DESMODUR® VL, von Covestro. Weitere Beispiele sind VESTANAT® HAT 2500 LV, VESTANAT® HB 2640 LV oder VESTANAT® T 1890E von der Evonik Industries. Beispiele für Isocyanat-Prepolymere sind DESMODUR® E XP 2863, DESMODUR® XP 2599 oder DESMODUR® XP 2406 von Covestro. Weitere dem Fachmann bekannte Isocyanat-Prepolymere können eingesetzt werden.

Vorzugsweise ist das filmbildende Polymer ausgewählt aus der Gruppe der epoxyfunktionellen Silan bzw. Siloxan, aromatischen oder aliphatischen Glycidylether oder deren Kondensate oder Mischungen daraus ausgewählt ist, das mit einem aminhaltigen Härter reagiert.

Bevorzugte epoxyfunktionellen Verbindungen sind die von Epichlorhydrin abgeleiteten Glycidylether, Glycidylester und Glycidylamine, besonders bevorzugt Bisphenol A Diglycidylether, Bisphenol F Diglycidylether, Glycidylether

von Novolaken (Epoxy-Novolak-Harze), hydrierter Bisphenol A Diglycidylether, hydrierter Bisphenol F Diglycidylether, Phenylglycidylether, Kresylglycidylether, tert-Butylglycidylether, Diglycidylanilin, Tetraglycidylmethylendianilin, Triglycidylaminophenol, 1,6-Hexandiglycidylether, 1,4-Butandiglycidylether, Cyclohexandimethyldiglycidylether, Alkylglycidylether, Benzylglycidylether, Trimethylolpropantriglycidylether, Pentaerythritoltetraglycidylether, bromierte Glycidylether wie Tetrabrombisphenol A Diglycidylether, Alkylglycidylester, Triglycidylisocyanurat, Allylglycidylether, Poly(alkylenglykol)diglycidylether sowie Epoxidverbindungen von ungesättigten Kohlenwasserstoffen und ungesättigten Fetten bzw. Fettsäuren. Ebenfalls besonders bevorzugt sind oligomere und polymere Epoxidverbindungen ausgewählt aus Epoxidgruppen tragenden Polyolefinen und Siloxanen oder Epoxidverbindungen, die durch eine Kettenverlängerung bevorzugt aus Diglycidylethern mit OH-funktionellen Verbindungen entstanden sind. Besonders bevorzugt sind Epoxidverbindungen mit zwei oder mehr als zwei Epoxidgruppen pro Molekül.

Epoxyfunktionelle Siloxane sind im Markt erhältlich u.a. von Evonik Industries unter dem Handelsnamen TEGOMER® E-Si 2330 oder von ShinEtsu unter den Handelsnamen KF-105, X22-163 a, X22-163 b, X22-163 c, X22 - 169 As, X22-169 B oder Dow Corning Toray AY 42-119, BY 16-760, BY 16-839, BY 16-869, BY 16-870, BY 16-877. Epoxyverbindungen sind im Markt u.a. von Momentive/Hexion unter den Handelsnamen Epon, Eponex, Epalloy bzw. Ipox Chemicals unter den Handelsnamen ipox ER, ipox CL und ipox RD. Chemisch verbundene Epoxy-Siloxan Harze sind u.a. unter dem Markennamen SILIKOPON® von Evonik Industries erhältlich.

Vorzugsweise handelt es sich bei den aminhaltigen Härtern um aminofunktionelle Alkoxysilane oder um organische aminofunktionelle Verbindungen oder Mischungen davon.

Bevorzugte aminofunktionelles Alkoxysilane sind aminofunktionelle Mono-, Di- oder Trialkoxysilane. Derartige aminofunktionelle Alkoxysilane sind im Markt verfügbar, beispielsweise unter den Handelsnamen Dynasylan® (Fa. Evonik Industries AG), Silquest® (Fa. Momentive), KBE903, KBM903, KBM603, KBE603, KBM602 (Fa. ShinEtsu), Geniosil® (Fa. Wacker Chemie) oder Z-6011, AZ-720, Z-6610, Z-6015, Z-6020Z, Z-6094, Z-6021, 1-6436Z-6023, AY43-009 (Fa. Dow Corning).

Bevorzugte organische aminofunktionelle Verbindungen können beispielsweise aliphatische Amine, aliphatische Aminaddukte, Polyamidoamine, cycloaliphatische Amine, cycloaliphatische Aminaddukte, aromatische Amine, Mannich Basen oder Ketimine sein. Beispiele für verwendbare aminohaltige Härter sind kommerziell unter den Markennamen D.E.H.® von Olin oder ANCAMINE® und ANCAMIDE® von Evonik Industries erhältlich.

Vorzugsweise ist das filmbildende Polymer ein filmformendes alkoxysilylgruppenhaltiges Polymer, das durch den Mechanismus der Hydrolyse-Kondensation aushärtet. Besonders bevorzugt kann die Hydrolyse-Kondensation in Kombination mit mindestens einem Katalysator beschleunigt werden.

Typischerweise handelt es sich bei diesen Polymeren um Silikonharze, Silikonharzintermediate oder silanmodifizierte organische Harze.

Beispiele für alkoxyfunktionelle verzweigte Methyl- und Methyl-/Phenyl-Silikonharze sind erhältlich von Dow Corning unter den Handelsnamen Dow Corning® US-CF 2403 Resin, US-CF 2405 Resin, 3037 Intermediate, 3074 Intermediate. Silanolfunktionelle Methyl-/Phenylharze werden unter dem Handelsnamen RSN-0409 HS Resin, RSN-0431 HS Resin, RSN-0804 Resin, RSN-0805 Resin, RSN-0806 Resin, RSN-0808 Resin, RSN-0840 Resin vertrieben.

Bevorzugt handelt es sich bei den silanmodifizierte organischen Harzen um Silan-terminierte Polyether, Polyurethane oder Silan-Urethan-hybridharze. Beispiele für Silan-terminierte Polyether sind u.a. unter dem Handelsnamen TEGOPAC® Bond oder Polymer ST bei der Firma Evonik Industries erhältlich. Silan-terminierte Polyurethane sind kommerziell unter dem Markennamen DESMOSEAL® S XP von Covestro erhältlich. Beispiele für Silan-Urethan-Hybridharze sind Produkte mit dem Markennamen VESTANAT® EP-M oder VESTANAT® EP-MF, erhältlich bei Evonik Industries.

Weitere filmbildende Polymere sind Polyester-, Alkyd-, Kollophonium-, Maleinat-, Epoxid- und Melamin-Formaldehyd- und Polyharnstoff-, Silikon-, Epoxyacrylat-, Acryl-, Methacryl, Silylacrylat- und Silylmethacrylatcopolymere, Fluorpolymere, und Bitumen, wobei diese als Dispersion, Emulsion, Lösung oder Konzentrat vorliegen können. Es ist vorstellbar, diese auch für die erfindungsgemäße härtbare Zusammensetzung zu verwenden. Dem Fachmann ist ebenfalls bekannt, geeignete weitere Komponenten zur Unterstützung der Filmbildung auszuwählen.

Vorzugsweise enthalten die erfindungsgemäßen Zusammensetzungen weitere Zusatzstoffe ausgewählt aus der Gruppe der Katalysatoren, Vernetzer, Weichmacher, Füllstoffe, Lösungsmittel, Haftvermittler, Rheologieadditive, Stabilisatoren und Trocknungsmittel, insbesondere chemische Feuchtigkeitstrocknungsmittel.

Bevorzugt werden Katalysatoren ausgewählt aus der Gruppe der Organozinnkatalysatoren, Titanate oder Zirkonate, metallorganische Verbindungen des Aluminiums, Eisens, Calciums, Magnesiums, Zinks oder Bismuths, Lewis-Säuren oder organische Säuren/Basen, lineare oder zyklische Amidine, Guanidine oder Amine oder eine Mischung daraus eingesetzt.

Vorzugseise werden als Härtungs-Katalysatoren organische Zinnverbindungen, wie z.B. Dibutylzinndilaurat, Dibutylzinndiacetylacetonat, Dibutylzinndiacetat, Dibutylzinndioctoat, oder Dioctylzinndilaurat, Dioctylzinndiacetylacetonat, Dioctylzinndiketanoat, Dioctylstannoxan, Dioctylzinndicarboxylat, Dioctylzinnoxid, bevorzugt Dioctylzinndiacetylacetonat, Dioctylzinndilaurat, Dioctylzinndiketanoat, Dioctylstannoxan, Dioctylzinndicarboxylat, Dioctylzinnoxid, besonders bevorzugt Dioctylzinndiacetylacetonat und Dioctylzinndilaurat eingesetzt. Des Weiteren können auch Zinksalze, wie Zinkoctoat, Zinkacetylacetonat und Zink-2-ethylcaproat, oder Tetraalkylammoniumverbindungen, wie N,N,N-Trimethyl-N-2-hydroxypropyl-ammonium-hydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt diejenige von Zinkoctoat. Weiter bevorzugt sind Bismutkatalysatoren, z.B. TIB Kat (TIB Mannheim) oder Borchi®-Katalysatoren, Titanate, z.B. Titan(IV)isopropylat, Eisen(III)-Verbindungen, z.B. Eisen(III)-acetylacetonat, Aluminiumverbindungen, wie Aluminiumtriisopropylat, Aluminiumtri-sec-butylat und andere Alkoholate sowie Aluminiumacetylacetonat, Calciumverbindungen, wie Calciumdinatriumethylendiamintetraacetat oder Calciumdiacetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc.. Auch organische oder anorganische Brönstedsäuren wie Essigsäure, Trifluoressigsäure, Methansulfonsäure, p-Toluolsulfonsäure oder Benzoylchlorid, Salzsäure, Phoshorsäure deren Mono- und/oder Diester, wie z.B. Butylphosphat, (Iso-)Propylphosphat, Dibutylphosphat etc., sind als Katalysatoren bevorzugt. Weiter bevorzugt sind Guanidin-Gruppen tragende organische und Silicium-organische Verbindungen. Selbstverständlich können auch Kombinationen mehrerer Katalysatoren eingesetzt werden. Darüber hinaus können auch photolatente Basen als Katalysatoren verwendet werden, wie sie in der WO 2005/100482 beschrieben sind.

Der Härtungskatalysator wird in Mengen von 0,01 bis 5,0 Gew.-%, bevorzugt 0,05 bis 4,0 Gew.-% und besonders bevorzugt 0,1 bis 3 Gew.-% bezogen auf die Gesamtmasse der härtbaren Zusammensetzung eingesetzt.

Es kann vorteilhaft sein, dass die härtbare Zusammensetzung einen Vernetzer aufweist, gemäß der Formel (II)

$$R^4_eSi(OR^5)_f \qquad \text{Formel (II)}$$

mit der Maßgabe $0 \leq e \leq 2$, $0 \leq f \leq 4$ und $e + f = 4$,
$R^4$ = unabhängig voneinander eine Alkylgruppe oder Cycloalkylgruppe mit 1 bis 8 Kohlenstoffatomen oder eine aromatische Gruppe mit 6 bis 20 Kohlenstoffatomen, oder eine Aminoalkylgruppe
$R^5$ = unabhängig voneinander eine Alkylgruppe mit 1 bis 8 Kohlenstoffatomen, bevorzugt eine Methyl-, Ethyl-, Propyl- oder Isopropylgruppe.

Alkylgruppen können beispielweise sein Methyl-, Ethyl-, Propyl-, Isopropyl-, n-Butyl-, sec-Butyl-, t-Butyl-gruppe. Eine aromatische Gruppierung kann beispielsweise eine Phenyl-Gruppierung sein. Bevorzugte Substituenten $R^5$ sind Methyl- oder Phenyl- bzw. Mischungen aus Methyl- und Phenyl, bei denen das Ph : Me.-Verhältnis im Bereich von 0 : 1 bis 1 : 0 liegen kann.

Der Anteil der Vernetzer den erfindungsgemäßen härtbaren Zusammensetzung beträgt vorzugsweise von größer 0 bis 5 Gew.-%, bevorzugt von 0,2 bis 3 Gew.-% bezogen auf die Einsatzmenge der Alkoxysilylgruppen tragenden Polymere.

Es kann vorteilhaft sein, dass die härtbare Zusammensetzung ein Trocknungsmittel aufweist, z. B. zum Binden von durch Formulierungskomponenten eingetragenen, oder nachträglich durch den Abfüllprozess oder die Lagerung eingebrachten Wassers oder Feuchtigkeit. Als Trocknungsmittel können in den härtbaren Zusammensetzungen prinzipiell alle aus dem Stand der Technik bekannten Trocknungsmittel eingesetzt werden. Bevorzugt sind als chemisches Trocknungsmittel Vinyltrimethoxysilan (Dynasylan® VTMO, Evonik oder Geniosil® XL 10, Wacker), Vinyltriethoxysilan (Dynasylan® VTEO, Evonik oder Geniosil® GF 56, Wacker), N-Trimethoxysilylmethyl-O-methyl-carbamat (Geniosil® XL 63, Wacker), N-Dimethoxy(methyl)silylmethyl-O-methyl-carbamat, N-Methyl[3-(Trimethoxysilyl)-propyl]carbamat (Geniosil® GF 60, Wacker), Vinyldimethoxymethylsilan (Geniosil® XL 12, Wacker), Vinyltris(2-methoxyethoxy)silan (Geniosil® GF 58, Wacker) Bis(3-triethoxysilylpropyl)amin (Dynasylan® 1122, Evonik), Bis(3-trimethoxysilylpropyl)amin (Dynasylan® 1124), N-Dimethoxy(methyl)silylmethyl-O-methyl-carbamat (Geniosil® XL 65, Wacker) oder oligomere Vinylsilane wie beispielsweise Dynasylan® 6490 und Dynasylan® 6498 (beide zu beziehen von Evonik) alleine oder deren Mischungen. Mehr bevorzugt sind die Trocknungsmittel ausgewählt aus Vinyltrimethoxysilan (Dynasylan® VTMO, Evonik oder Geniosil® XL 10, Wacker AG), Vinyltriethoxysilan (Dynasylan® VTEO, Evonik oder Geniosil® GF 56, Wacker). Ferner kann es vorteilhaft sein, wenn zusätzlich oder alternativ zur chemischen Trocknung ein physikalisches Trocknungsmittel, wie bevorzugt Zeolith, Molsieb, wasserfreies Natriumsulfat oder wasserfreies Magnesiumsulfat verwendet werden.

Der Anteil der Trocknungsmittel in den erfindungsgemäßen härtbaren Zusammensetzung beträgt vorzugsweise von größer 0 bis 5 Gew.-%, bevorzugt von 0,2 bis 3 Gew.-% bezogen auf die Einsatzmenge der Alkoxysilylgruppen tragenden Polymere.

Auch kann die Verwendung von Lösungsmitteln sinnvoll sein. Die Lösungsmittel können dabei beispielsweise der Erniedrigung der Viskosität des unvernetzten Bindemittels dienen oder das Aufziehen auf die Oberfläche begünstigen.

Als Lösungsmittel kommen prinzipiell sämtliche Lösungsmittel sowie Lösemittelmischungen in Betracht. Die Wahl eines geeigneten Lösungsmittels kann dabei erfolgen aus der Gruppe der Alkane, Alkene, Alkine, Benzol und Aromaten mit aliphatischen und aromatischen Substituenten, Carbonsäureester, lineare und cyclische Ether und bei hohen Drücken auch Kohlenstoffdioxid, halogenierte aliphatische oder aromatische Kohlenwasserstoffe, Ketone oder Aldehyde, Lactone ($\gamma$-Butyrolacton), Lactame (z.B. N-Methyl-2-pyrrolidon), Nitrile, Nitroverbindungen, tertiäre Carbonsäureamide (Dimethylformamid), Harnstoffderivate wie Tetramethylharnstoff oder Dimethylpropylenharnstoff (DMPU), Sulfoxide wie Dimethylsulfoxid (DMSO), Sulfone wie Sulfolan, Kohlensäureester wie Dimethylcarbonat oder Ethylencarbonat. Auch seien protische Lösungsmittel genannt wie Wasser, Methanol, Ethanol, n- und Isopropanol und andere Alkohole, primäre und sekundäre Amine, Carbonsäuren und deren Ester wie auch Anhydride, primäre und sekundäre Amide wie Formamid. Bevorzugt sind im Bereich der Coatinganwendungen akzeptierte Lösungsmittel wie Ether z.B. t-Butyl-methylether, Ester, wie z.B. Ethylacetat oder n-Butylacetat, tert-Butylacetat oder Diethylcarbonat sowie Alkohole, wie z.B. Ethanol und die verschiedenen Regioisomeren des Propanols und Butanols. Weiterhin sind bevorzugte Lösungsmittel aromatische und/oder aliphatische Lösemittel wie Benzol, Toluol oder Napthaschnitte.

Bei Bedarf können außerdem eine oder mehrere Substanzen zugefügt werden, ausgewählt aus der Gruppe umfassend Co-Vernetzer, Flammschutzmittel, Entlüfter, Härtungsbeschleuniger für die Amin-Epoxid-Reaktion, antimikrobielle und konservierende Stoffe, Farbstoffe, Färbemittel und Pigmente, Frostschutzmittel, Fungizide und/oder Reaktivverdünner sowie Komplexbildner, Sprühhilfsmittel, Netzmittel, Duftstoffe, Lichtschutzmittel, Radikalfänger, UV-Absorber und Stabilisatoren, insbesondere Stabilisatoren gegen thermische und/oder chemische Belastungen und/oder Belastungen durch ultraviolettes und sichtbares Licht.

UV-Stabilisatoren sind bevorzugt bekannte Produkte auf Basis gehinderter phenolischer Systeme oder Benzotriazole. Als Licht-Stabilisatoren können z. B. sogenannte HALS-Amine eingesetzt werden. Als Stabilisatoren können z. B. die dem Fachmann bekannten Produkte oder Produktkombinationen aus z.B. Tinuvin®-Stabilisatoren (BASF), wie z. B. Tinuvin®-Stabilisatoren (BASF), beispielsweise Tinuvin® 1130, Tinuvin® 292 oder auch Tinuvin® 400, bevorzugt Tinuvin® 1130 in Kombination mit Tinuvin® 292 eingesetzt werden. Ihre Einsatzmenge richtet sich nach dem Grad der erforderlichen Stabilisierung.

Für die Farbgebung bei Beschichtungen eignen sich Pigmente auf Basis von Titandioxid und andere Weißpigmenten, Anorganische Farbpigmente wie z.B. Eisenoxide, Chrompigmente, Ultramarinpigmente, Organische Farbpigmente wie Azopigmenten, Phthalocyaninpigmenten, Perylenpigmenten, Quinacridonpigmenten, darüberhinaus Ruße. Für die Verbesserung des Korrosionsschutzes kommen noch die typischen Korrosionsschutzpigmente wie z.B. Zinkphoshat zum Einsatz.

Füllstoffe sind bevorzugt gefällte oder gemahlene Kreide, anorganische Carbonate im allgemeinen, gefällte oder gemahlene Silikate, gefällte oder pyrogene Kieselsäuren, Glaspulver, Glashohlkugeln (sog. Bubbles), Metalloxide, wie z.B. $TiO_2$, $Al_2O_3$, natürliche oder gefällte Bariumsulfate, Quarzmehle, Sand, Aluminiumtrihydrate, Talkum, Glimmer, Christobalitmehle, verstärkende Fasern, wie Glasfasern oder Kohlefasern, lang oder kurzfaserige Wollastonite, Kork, Ruß oder Graphit. Vorteilhaft können hydrophobierte Füllstoffe eingesetzt werden, da diese Produkte einen geringeren Wassereintrag aufweisen und die Lagerstabilität der Formulierungen verbessern.

Es ist vorstellbar, die erfindungsgemäße Zusammensetzung als 2K-Systeme bereitzustellen. Hierbei werden die filmbildenden Polymere getrennt von den Härtern oder Katalysatoren bereitgestellt. Die Bereitstellung der erfindungsgemäßen Zusammensetzung kann dem bereits bestehenden Herstellungsverfahren der jeweiligen Beschichtung adaptiert werden.

Dem Fachmann ist bekannt, dass weitere Varianten der Zusammensetzung möglich sind. Sie sind jeweils den prozessualen Gegebenheiten bei der Herstellung und Verwendung anzupassen.

Bevorzugt werden die Siloxane gemäß Formel (I) in Konzentrationen von 0,1 Gew.- % bis 40 Gew.- %, bevorzugt 1 Gew.- % bis 35 Gew.- % und besonders bevorzugt 2 Gew.- % bis 20 Gew.- %, bezogen auf die härtbare Zusammensetzung, eingesetzt werden.

Ein weiterer Gegenstand der Erfindung ist die Verwendung der härtbaren Zusammensetzung zur Herstellung von Beschichtungen mit anti-adhäsiven Eigenschaften, wie z. B. anti-soiling-Eigenschaften bzw. easy-to-clean Eigenschaften, anti-graffiti-Eigenschaften, anti-icing-Eigenschaften oder Antifouling Eigenschaften.

Auch die Verwendung von organomodifizierten, verzweigten Siloxanen der Formel (I) oder Mischungen davon als universelles anti-adhäsiv Additiv, vorzugsweise als Antifouling Additiv, anti-soiling Additiv bzw. easy-to-clean Additiv, anti-icing-Additiv oder anti-graffiti Additiv ist eine weitere Erfindung.

Ein weiterer Gegenstand der Erfindung ist ein Verfahren zur Bildung einer anti-adhäsiven Beschichtung auf einem Substrat, umfassend das Aufbringen einer härtbaren filmbildenden Zusammensetzung auf das Substrat, umfassend:

(a) mindestens ein filmbildendes Polymer, das funktionelle Gruppen enthält, welche mit einem isocyanathaltigen Härter, mit einem aminhaltigen Härter oder mit einem Katalysator reaktiv sind,

(b) mindestens ein organomodifiziertes, verzweigtes Siloxan gemäß der Formel (I) oder Mischungen davon und

(c) einen Härter, enthaltend isocyanatfunktionelle oder aminofunktionelle Gruppen, oder einen Katalysator.

Bevorzugt weist das Siloxan (b) ein zahlenmittleres Molekulargewicht von 2.500 - 70.000 g/Mol, bevorzugt 5.000 - 50.000 g/mol, besonders bevorzugt 7.000 - 35.000 g/mol auf.

Bevorzugt ist das Siloxan (b) in der härtbaren filmbildenden Zusammensetzung in einer Menge von 0,1 Gew.-% bis 40 Gew.- %, bevorzugt 1 Gew.- % bis 35 Gew.- % und besonders bevorzugt 2 Gew.- % bis 20 Gew.- %, vorhanden.

Bevorzugt wird die härtbare filmbildende Zusammensetzung bei Umgebungstemperatur gehärtet.

Bevorzugt enthält das Substrat Metall, Beton, Holz, Kunststoff und/oder Glasfaser und/oder Kohlenstofffaserverbundwerkstoff.

Bevorzugt umfasst das Substrat einen Schiffsrumpf, unterwasserliegende Strukturen, und/oder Ölbohrplattformen.

Bevorzugt wird eine Grundier- und/oder filmbildende Decklackzusammensetzung auf das Substrat vor der Auftragung der härtbaren filmbildenden Zusammensetzung aufgetragen.

Die im Verfahren eingesetzten Komponenten, wie filmbildende Polymere, Härter, Katalysatoren, Siloxanen beziehen sich auf die gleiche Komponente wie in der erfindungsgemäßen härtbaren Zusammensetzung.

Des Weiteren sind Beschichtungen enthaltend mindestens ein organomodifiziertes, verzweigtes Siloxan gemäß der Formel (I) als universelles anti-adhäsiv Additiv, vorzugsweise als Antifouling Additiv, anti-soiling Additiv, anti-icing Additiv oder anti-graffiti Additiv ebenso Gegenstand der vorliegenden Erfindung.

Die erfindungsgemäßen Gegenstände werden nachfolgend beispielhaft beschrieben, ohne dass die Erfindung auf diese beispielhaften Ausführungsformen beschränkt sein soll.

## Beispiele:

### Allgemeine Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden nachfolgend Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

### Applikation

Die Applikation der Zusammensetzungen findet im Allgemeinen durch Spritzapplikation statt, kann aber auch durch andere Applikationstechniken wie z. B. Streichen, Rollen, Fluten, Tauchen, Wischen, Gießen aufgetragen werden. Als Substrate eignen sich metallische Untergründe wie z. B. Stahl, Stahlguss, Edelstahl, Aluminium, Aluminiumguss oder feuerverzinkter Stahl. Für eine bessere Haftung kann das Substrat durch Sandstrahlen oder Anschleifen angeraut werden. Auch der Auftrag eines Voranstriches, auf Primer genannt ist möglich, um die Haftung zu verbessern. Auch nichtmetallische Substrate wie Glas, Kunststoffe oder anorganische Substrate wie Keramiken, Steinzeug, Beton etc. können zum Einsatz kommen.

Die auf das Substrat aufgebrachten erfindungsgemäßen Zusammensetzungen und Vergleichszusammensetzungen härten dann unter Reaktion der jeweiligen reaktiven Gruppen bzw. unter Zutritt von Luftfeuchtigkeit aus. Eine kombinierte forcierte Trocknung bei erhöhter Temperatur und gleichzeitig stattfindender chemische Vernetzung ist ebenfalls möglich.

## Verwendete Chemikalien und Rohstoffe:

Tabellen 1 und 2 führen die verwendeten Materialien auf.

Alle Siloxane A1 - A8 wurden nach einem Verfahren gemäß der Beschreibung auf den Seiten 4, Zeile 14 - Seite 5, Zeile 19, angelehnt an EP 2 176 319 B1 oder EP 2 159 248 B1 hergestellt.

Die Merkmale der erfindungsgemäßen Siloxane sind aus Tabelle 1 aufgeführt.

**Tabelle 1:** Verwendete Siloxane nach Formel (I)

| Nr. | Struktur | Modifizierung | $R^2$ | Anzahl | | | | | | Faktoren | | Viskosität* | Molekulargewicht** |
|---|---|---|---|---|---|---|---|---|---|---|---|---|---|
| | | | | a | a1 | b | b1 | c | d | F1 | K | | |
| A1 | Mono-T | Endständig | Propylglycidylether | 0 | 3 | 96 | 0 | 1 | 0 | 32 | 3 | 165 | 7.700 |
| A2 | Mono-T | Seitständig | Hydroxyethylpropylether | 3 | 0 | 150 | 6 | 1 | 0 | 52 | 3 | 172 | 12.400 |
| A3 | Mono-Q | Endständig | Ethyltrimethoxysilyl | 0 | 4 | 95 | 0 | 0 | 1 | 23,8 | 4 | 110 | 8.000 |
| A4 | Mono-Q | Seitständig | Dodecyl | 4 | 0 | 187 | 8 | 0 | 1 | 48,8 | 4 | 124 | 15.500 |
| A5 | Multi-T | Endständig | Propylglycidylether | 0 | 9 | 184 | 0 | 7 | 0 | 12,3 | 1,3 | 92 | 15.600 |
| A6 | Multi-T | Seitständig | Ethyltrimethoxysilyl | 9 | 0 | 375 | 9 | 7 | 0 | 25,6 | 1,3 | 677 | 30.800 |
| A7 | Multi-Q | Endständig | Hydroxyethylpropylether | 0 | 9 | 388 | 0 | 0 | 3,5 | 33,7 | 2,6 | 248 | 30.400 |
| A8 | Multi-Q | Seitständig | Aminopropyl | 9 | 0 | 366 | 20 | 0 | 4 | 29,7 | 2,5 | 450 | 30.500 |
| $R^1$ in A1 bis A8 = Methyl | | | | | | | | | | | | | |

*Werte in mPa·s (25 °C), gemessen nach DIN 53015

**Werte in g/Mol, gerundet

**Tabelle 2:** Weitere verwendete Chemikalien und Materialien

| **Handelsnamen** | **Hersteller** | **Verwendung** |
|---|---|---|
| SILIKOPON® EF | Evonik Industries AG oder eine ihrer Tochtergesellschaften | Filmbildendes Polymer |
| SILIKOTOP® E901 | Evonik Industries AG oder eine ihrer Tochtergesellschaften | Filmbildendes Polymer |
| VESTANAT® EP-MF 201 | Evonik Industries AG oder eine ihrer Tochtergesellschaften | Filmbildendes Polymer |
| Araldite® GZ 7071 | Huntsman Corporation | Filmbildendes Polymer |
| SETAL® 1603 | Allnex SA/NV | Filmbildendes Polymer |
| Aradur® 450 | Huntsman Corporation | Härter |
| DYNASYLAN AMEO | Evonik Industries AG oder eine ihrer Tochtergesellschaften | Härter |
| VESTANAT® HT 2500 LV | Evonik Industries AG oder eine ihrer Tochtergesellschaften | Härter |
| DESMODUR N 3600 | Covestro AG | Härter |
| DMS-C21 | Gelest Inc. | lineares, hydroxyterminiertes Siloxan |
| DMS-E21 | Gelest Inc. | lineares, epoxyterminiertes Siloxan |
| Methoxypropylacetat | Sigma Aldrich | Lösemittel |
| Propylenglykol | Sigma Aldrich | Lösemittel |
| Butylacetat | Sigma Aldrich | Lösemittel |
| Xylol | Sigma Aldrich | Lösemittel |
| Hydrosol A 170 | DHC Solvent Chemie GmbH | Lösemittel |
| TIB KAT® 218/318/716 | TIB Chemicals AG | Katalysator |
| TEGO® Airex 900/990 | Evonik Industries AG oder eine ihrer Tochtergesellschaften | Entschäumer |
| TEGO® Dispers 670 | Evonik Industries AG oder eine ihrer Tochtergesellschaften | Dispergieradditiv |
| TEGO® Glide 100 | Evonik Industries AG oder eine ihrer Tochtergesellschaften | Oberflächenadditiv |
| TEGO® Flow 425 | Evonik Industries AG oder eine ihrer Tochtergesellschaften | Oberflächenadditiv |
| THIXATROL® ST | Elementis Specialities, Inc. | Rheologie Additiv |
| KRONOS® 2360 | Kronos Titan GmbH | Pigment |
| Blanc Fix Micro | Sachtleben Chemie GmbH | Füllstoff |
| Tinuvin® 400 | BASF SE | Lichtstabilisator |
| Tinuvin® 292 | BASF SE | Lichtstabilisator |

**Beispiel 1: Herstellung der Beschichtungen**

Erfindungsgemäße Klarlack-Beschichtunaen (B1 - B5, B7 - B10):

Die Bestandteile der erfindungsgemäßen Zusammensetzungen B1 bis B5 und B7 bis B10 wurden mit den in Tabelle 3 aufgeführten Mengen, außer den Härtern und Katalysatoren, in eine 185 ml PP Schraubdose (Dürrmann GmbH & Co KG, 85664 Hohenlinden) eingewogen und mittels eines Speedmixers für 1 Minute bei 2000 Umdrehungen pro Minute (Fa. Hauschild Engineering, Typ DAC 150 FVZ) untergerührt. Nach einer Standzeit von 10 Minuten wurden die Härter und Katalysatoren zugegeben und mittels eines Speedmixers ein weiteres Mal für 1 Minute bei 2000 Umdrehungen pro Minute untergerührt.

Erfindungsgemäße Weißlack-Beschichtung (B6):

Für die Herstellung der erfindungsgemäßen Weißlack-Beschichtung wurden in einer 250 ml Glasflasche 30 g SILIKOPON EF sowie die Komponenten A2, A5, Tego Airex 900, Tego Dispers 670, Thixatrol ST, Kronos 2360, Blanc fix micro und Xylol gemäß Tabelle 3 eingewogen und mittels Skandex Disperser (Modell DAS 200, Fa. Lau) für 2h dispergiert. Anschließend wurden weitere 25 g SILIKOPON EF sowie die Komponenten Butylacetat, Tinuvin 292 und Tinuvin 400 gemäß Tabelle 3 mit einem Speedmixer (Fa. Hauschild Engineering, Typ DAC 150 FVZ) für 1 Minute bei 2000 Umdrehungen pro Minute eingerührt. Nach einem Tag Reifung wurde die Farbpaste mit Dynasylan AMEO und TibKat 318 gemischt.

Vergleichsbeschichtungen (VB1 - VB7):

Die Vergleichsbeschichtungen VB1 bis VB4 sowie VB6 und VB7 werden analog zu den erfindungsgemäßen Klarlackbeschichtungen hergestellt. VB5 wird analog zur erfindungsgemäßen Weißlackbeschichtung hergestellt. VB1, VB2, VB5 und VB6 sind Standard-Lacksysteme ohne Zugabe von Siloxanen. Bei VB3, VB4 und VB7 wurde ein lineares difunktionelles Siloxan hinzugegeben. Die Mengen der Komponente sind in Tabelle 4 aufgeführt.

Applikation:

Nach kurzer Ruhezeit von 5 Minuten wurden die erfindungsgemäßen Beschichtungen B1 bis B10 sowie Vergleichsbeschichtungen VB1 bis VB7 zur Beurteilung der Filmeigenschaften mittels Kasten-Rakel (100μm, Fa. Simex) bei RT auf mit Isopropanol gereinigten Glasplatten (Fa. Gläserei Glänzer, Maße: 90 x 150 x 5mm) aufgezogen und bei RT getrocknet; Darüber hinaus wurden mittels Sprühapplikation PVC Panels (PVC - Platten, 200x400x5mm, Art.Nr:4364002858, KVG Kunststoff Betriebs GmbH) beschichtet, die zuvor mit einem Primer zur besseren Adhäsion vorbehandelt wurden. Weiterhin wurden Aluminiumprüfbleche (Q-PANEL Typ A, 152 x 102 x 0,64 mm) mittels Sprühapplikation beschichtet, die zuvor mit einem Primer zur besseren Adhäsion vorbehandelt wurden. Zur Messung der Eisanhaftung wurden Edelstahlplatten mit den Abmaßen 100 x 40 x 15 mm (Eigenanfertigung) mittels Sprühapplikation beschichtet, die zuvor mit einem Primer zur besseren Adhäsion vorbehandelt wurden.

Um die nötigen Spritzviskositäten zu erreichen, wurden diese durch Verdünnung mit Xylol (Isomerengemisch) oder Butylglykol eingestellt. Die Trocknung erfolgte abschließend für 24 Stunden in dafür vorgesehenen Trockenschränken bei RT. Alle weiteren Messungen und Versuche wurden nach mindestens sieben Tagen Lagerung bei Raumtemperatur durchgeführt.

**Tabelle 3:** Rezeptur zur Herstellung der erfindungsgemäßen Beschichtungen B1 bis B10

| | B1 | B2 | B3 | B4 | B5 | B6 | B7 | B8 | B9 | B10 |
|---|---|---|---|---|---|---|---|---|---|---|
| A1 (g) | | | | | | | | | 3 | |
| A2 (g) | | | 5 | | | 5 | | 2,5 | | |
| A3 (g) | | | | | | | | | | 2,5 |
| A4 (g) | 10 | | | | | | | | | |
| A5 (g) | | | | 5 | | 4 | | | | |
| A6 (g) | | | 4 | | | | | | | |
| A7 (g) | | 9 | | | | | 8 | | | |

(fortgesetzt)

| | B1 | B2 | B3 | B4 | B5 | B6 | B7 | B8 | B9 | B10 |
|---|---|---|---|---|---|---|---|---|---|---|
| A8 (g) | | | | | 10 | | | | | |
| SILIKOPON® EF (g) | 93,6 | | | | 93,6 | 55 | | | 93,6 | |
| SILIKOTOP E901 (g) | | 81,9 | | | | | | | | |
| VESTANAT® EP-MF 201 (g) | | | 89 | | | | | | | 89 |
| ARALDITE® GZ 7071 (g) | | | | 80 | | | | | | |
| SETAL® 1603 (g) | | | | | | | 72,2 | 72,2 | | |
| ARADUR® 450 (g) | | | | 14,4 | | | | | | |
| DYNASYLAN AMEO (g) | 22 | | | | 22 | 13 | | | 2,9 | |
| VESTANAT® HT 2500 LV (g) | | 55 | | | | | | | | |
| DESMODUR N3600 (g)*** | | | | | | | 39,7 | 39,7 | | |
| Methoxypropylacetat (g) | | 3,2 | | | | | | | | |
| Propylenglykol (g) | | 0,5 | | | | | | | 4,9 | |
| Butylacetat (g) | 6,8 | 5,4 | | | 6,8 | 2 | | | | |
| Xylol (g) | | | 10 | 5,6 | | 1 | 15,3 | 15,3 | | 10 |
| Hydrosol A170 | | | | | | | 1,4 | 1,4 | | |
| TEGO® Glide 100** (g) | | 1 | 0,5 | | | | | | | 0,5 |
| TIB KAT® 218* (g) | | 6,5 | | | | | | | 22 | |
| TIB KAT® 716* (g) | | | | | | | 11 | 11 | | |
| TIB KAT® 318 (g) | 1 | | | | 1 | 1,65 | | | | |
| TEGO® Airex 900 (g) | | | | | | 1 | | | | |
| TEGO®Dispers 670 (g) | | | | | | 1 | | | | |
| THIXATROL® ST (g) | | | | | | 1 | | | | |
| Blanc Fix Micro (g) | | | | | | 7 | | | 0,5 | |
| Tinuvin® 292 (g) | 0,5 | 0,5 | 0,5 | | 0,5 | 0,5 | | | 1,0 | 0,5 |
| Tinuvin® 400 (g) | 1,0 | 1,0 | | | 1,0 | 1,0 | | | | |
| KRONOS® 2360 (g) | | | | | | 30,5 | | | | |
| TEGO® Airex 990 (g) | | 1,15 | | | | | 0,1 | 0,1 | | |
| *1% gelöst in Butylacetat<br>**10% gelöst in Butylacetat<br>***90% gelöst in Butylacetat | | | | | | | | | | |

**Tabelle 4:** Rezeptur zur Herstellung der Vergleichsbeschichtungen VB1 - VB7

| | VB1 | VB2 | VB3 | VB4 | VB5 | VB6 | VB7 |
|---|---|---|---|---|---|---|---|
| SILIKOPON® EF (g) | 93,6 | | 93,6 | | 55 | | |
| DMS-C21 (g) | | | | 10 | | | 10 |
| DMS-E21 (g) | | | 10 | | | | |
| VESTANAT® EP-MF 201 (g) | | 81,9 | | 81,9 | | | |
| SETAL 1603 (g) | | | | | | 72,2 | 72,2 |

(fortgesetzt)

| | VB1 | VB2 | VB3 | VB4 | VB5 | VB6 | VB7 |
|---|---|---|---|---|---|---|---|
| Methoxypropylacetat (g) | | 3,2 | | 3,2 | | | |
| Propylenglykol (g) | | 0,5 | | 0,5 | | | |
| Butylacetat (g) | 6,8 | 5,4 | 6,8 | 5,4 | 2 | | |
| Xylol (g) | | | | | 2 | 15,3 | 15,3 |
| Hydrosol A170 | | | | | | 1,4 | 1,4 |
| TEGO® Glide 100** (g) | | 1 | | 1 | | | |
| TIB KAT® 218* (g) | | 6,5 | | 6,5 | | | |
| TIB KAT® 716* (g) | | | | | | 11 | 11 |
| DANYSYLAN AMEO (g) | 22 | | 22 | | 13 | | |
| TibKat318 (g) | 1 | | 1 | | 0,65 | | |
| VESTANAT® HT 2500 LV (g) | | 55 | | 55 | | | |
| DESMODUR N3600 (g)*** | | | | | | 39,7 | 39,7 |
| TEGO® Airex 900 (g) | | | | | 1 | | |
| TEGO®Dispers 670 (g) | | | | | 1 | | |
| THIXATROL® ST (g) | | | | | 1 | | |
| Blanc Fix Micro (g) | | | | | 7 | | |
| Tinuvin® 292 (g) | 0,5 | 0,5 | 0,5 | 0,5 | 0,5 | | |
| Tinuvin® 400 (g) | 1,0 | 1,0 | 1,0 | 1,0 | 1,0 | | |
| KRONOS® 2360 (g) | | | | | 30,5 | | |
| TEGO® Airex 990 (g) | | 1,15 | | 1,15 | | 0,1 | 0,1 |
| *1% gelöst in Butylacetat<br>**10% gelöst in Butylacetat<br>***90% gelöst in Butylacetat | | | | | | | |

**Beispiel 2: Beurteilung der Beschichtung**

2.1 Trockenzeitmessungen

Es wurde die Trockenzeit mittels eines Drying Recorders Typ BK3 (The Mickle Laboratory Engineering Co. Ltd., Goose Green, Gomshall, Guildford, Surrey GU5 9LJ., U.K.) nach ASTM D5895 durchgeführt. Dabei wurden die hergestellten Beschichtungen auf Standardglasstreifen (30 x 2,5 cm x 2 mm) mittels eines Kastenrakels (Erichsen Model 360, Nassfilmschichtdicke 100 μm) aufgetragen. Die Standardglasstreifen wurden zuvor mit Aceton und nachfolgend einer Ethanol/VE-Wasser-Mischung von Staub, Schmutz- und Fettanhaftungen befreit. Es wurde sodann der Schieber mittels eines Hebels auf der Rückseite, nach links in Startposition verschoben. Dann wurden die Ritznägel auf die Probenglasplatten runtergeklappt. Die Prüfdauer wurde auf 6, 12 bzw. 24 Stunden eingestellt und die Messung gestartet. Nach Ablauf der Prüfdauer wurden die Ritznägel hochgeklappt und die Glasplatten zur Beurteilung herausgenommen. Die An- und Durchtrocknungszeitpunkte wurden anhand der angebrachten Zeitskala abgelesen.

2.2 Härtemessung

Zur Beurteilung der Härte der erfindungsgemäßen Beschichtungen und der Vergleichsbeschichtungen eignet sich die Pendeldämpfung nach König oder Persoz, definiert in DIN EN ISO 1522. Analog dieser Prüfmethode wurden die Härtegrade mittels eines Pendelhärtemessgeräts (Modell 299/300, Erichsen GmbH & Co. KG) durchgeführt. Hierfür wurden Aluminiumprüfbleche (Q-PANEL Typ A, 152 x 102 x 0,64 mm) mittels Sprühapplikation mit der jeweiligen Beschichtungen beschichtet, die zuvor mit einem Primer zur besseren Adhäsion vorbehandelt wurden Die beschichtete

Aluminiumprüfbleche wurden in das Pendelhärtemessgerät eingespannt und das Pendel schwingen gelassen. Nach Beendigung der Versuche wurde der vom Gerät ermittelte Wert abgelesen.

Tabelle 5 zeigt die Auswertung der Beschichtungen hinsichtlich der Trockenzeit, Aussehen und Härte.

**Tabelle 5:** Bewertung der Trockenzeit, Aussehen und Härte

| | Trockenzeit [h] | Aussehen | Härte* | | Trockenzeit [h] | Aussehen | Härte* |
|---|---|---|---|---|---|---|---|
| B1 | < 12 | 2 | 128 | VB1 | < 12 | 1 | 132 |
| B2 | < 12 | 2 | 71 | VB2 | < 12 | 1 | 80 |
| B3 | < 6 | 2 | 113 | VB3 | < 12 | 2 | 83 |
| B4 | < 12 | 2 | 105 | VB4 | < 12 | 2 | 35 |
| B5 | < 24 | 2 | 117 | VB5 | < 12 | 1 | 121 |
| B6 | < 12 | 1 | 108 | VB6 | < 12 | 1 | 128 |
| B7 | < 12 | 2 | 113 | VB7 | < 12 | 3 | 69 |
| B8 | < 12 | 1 | 120 | | | | |
| B9 | < 12 | 1 | 126 | | | | |
| B10 | < 6 | 1 | 134 | | | | |
| *Anzahl Schwingungen, gemessen nach DIN EN ISO 1522 | | | | | | | |

Visuelle Beurteilung der Beschichtung:

1 = sehr gut, gleichmäßiger Aufzug, defektfrei, klar;

2 = gut gleichmäßiger Aufzug, größtenteils defektfrei, klar oder trüb,

3 = nicht ok, ungleichmäßiger Aufzug, viele Defektstellen

Im Hinblick auf die Trockenzeit zeigen die erfindungsgemäßen Beschichtungen wenig Unterschied zu den Vergleichsbeispielen. Zudem zeigen sie eine höhere Härte im Vergleich zu den Vergleichsbeschichtungen VB3, VB4 und VB7 auf, so dass sie bei mechanischer Belastung beständiger sind.

**Beispiel 3: Messung und Beurteilung der Beschichtung im Hinblick auf die anti-adhäsive Eigenschaft**

3.1 Bestimmung der Antifoulingeigenschaft

Zur Prüfung der Zusammensetzungen hinsichtlich deren Wirksamkeit zur Verhinderung von Biofouling im Meerwasser wurden die unter Beispiel 1 hergestellten Beschichtungen auf PVC-Panels, analog wie oben beschrieben, appliziert, welche zu statischen Auslagerungsexperimenten in die Nordsee (Hooksiel bzw. Norderney) verbracht wurden.

Die Auslagerung der beschichteten PVC- Testpanels (erfindungsgemäße Beschichtungen B1 - B7, Vergleichsbeschichtungen VB1 - VB7) der Abmaße 20 x 40 cm erfolgte dabei im Zeitraum von Anfang März 2017 bis Anfang Oktober 2017 in einer Tiefe von 20 cm unter der Wasseroberfläche. Alle 2 Monate wurden die Testpanels visuell untersucht und hinsichtlich des Bewuchses bewertet. Es wurde ferner mit einem handelsüblichen Gummiwischer (Fenstergummilippe) im unteren Bereich des Testpanels ein Streifen von 10 cm drucklos, je einmal von rechts nach links und sodann von links nach rechts, gewischt, um die Entfernbarkeit des Bewuchses zu erfassen.

Die Gesamtbewertung erfolgte mittels einer wie folgt dargestellten Skala von

0 = kein Bewuchs
1 = minimaler Bewuchs, sehr leicht zu entfernbar
2 = leichter Bewuchs, sehr leicht zu entfernen
3 = mittelstarker Bewuchs, deutliche Rückstände
4 = starker Bewuchs, starke Rückstände
5 = sehr starker Bewuchs, nicht zu entfernen

**Tabelle 6:** Ergebnisse der Auslagerungsexperimente

| Beschichtung | März | Mai | Juli | September | Oktober |
|---|---|---|---|---|---|
| B1 | 0 | 0 | 0 | 1 | 1 |
| B2 | 0 | 0 | 1 | 2 | 2 |
| B3 | 0 | 0 | 1 | 2 | 2 |
| B4 | 0 | 0 | 1 | 1 | 2 |
| B5 | 0 | 0 | 0 | 1 | 2 |
| B6 | 0 | 0 | 1 | 2 | 2 |
| B7 | 0 | 0 | 1 | 1 | 2 |
| VB1 | 0 | 2 | 3 | 4 | 5 |
| VB2 | 0 | 2 | 3 | 4 | 5 |
| VB3 | 0 | 1 | 1 | 2 | 3 |
| VB4 | 0 | 1 | 1 | 2 | 3 |
| VB5 | 0 | 2 | 3 | 4 | 5 |
| VB6 | 0 | 2 | 3 | 4 | 5 |
| VB7 | 0 | 1 | 1 | 2 | 3 |

Die Beschichtungen mit der erfindungsgemäßen Zusammensetzungen B1 - B7 zeigten einen leichten Bewuchs nach Ende des Prüfzeitraums auf, der sehr leicht zu entfernen war.

3.2 Bestimmung des Wasserkontaktwinkels

Zur Ermittlung des Wasserkontaktwinkels eignet sich die Bestimmung mittels eines Kontaktwinkelmessgeräts. Zur Bestimmung des Wasserkontaktwinkels der erfindungsgemäßen Beschichtungen und der Vergleichsbeschichtungen wurden Messungen mittels eines Kontaktwinkelmessgeräts OCA 20 (Firma DataPhysics Instruments GmbH, Raiffeisenstraße 34, 70794 Filderstadt, Deutschland) unter Zuhilfenahme der Software SCA 20 vom selben Hersteller durchgeführt. Dabei wurden beschichtete Aluminiumprüfbleche mit den Beschichtungen B1 - B10 bzw. VB1 bis VB7 in das Kontaktwinkelmessgerät eingespannt und Tropfen von 5 µl auf die Beschichtung aufgetropft. Der Kontaktwinkel wurde mittels der Software direkt nach dem Auftropfen und nach einer Minute Wartezeit gemessen.

**Tabelle 7:** Ergebnisse des Wasserkontaktwinkeltests

| | WCA | WCA' | | WCA | WCA' |
|---|---|---|---|---|---|
| B1 | 98 | 95 | VB1 | 81 | 79 |
| B2 | 99 | 95 | VB2 | 78 | 76 |
| B3 | 93 | 91 | VB3 | 89 | 86 |
| B4 | 97 | 94 | VB4 | 91 | 87 |
| B5 | 100 | 98 | VB5 | 78 | 75 |
| B6 | 95 | 92 | VB6 | 70 | 68 |
| B7 | 93 | 90 | VB7 | 85 | 83 |
| B8 | 89 | 87 | | | |
| B9 | 95 | 94 | | | |
| B10 | 88 | 86 | | | |

WCA (engl. Water contact angle) = Wasserkontaktwinkel direkt nach dem Auftropfen in ° WCA' = Wasserkontaktwinkel eine Minute nach Auftropfen in °

Es hat sich gezeigt, dass die erfindungsgemäßen Beschichtungen einen größeren WCA-Wert aufweisen als die von den Vergleichsbeschichtungen. Die erfindungsgemäßen Beschichtungen weisen somit eine höhere anti-haftende Wirkung auf.

3.3 Bestimmung der anti-graffiti-Eigenschaft mittels des Edding-Tests

Zur Prüfung der anti-graffiti-Eigenschaft der Beschichtungen wurden die applizierten Aluminiumprüfbleche mit den jeweiligen Beschichtungen B8 bis B10 sowie die Vergleichsbeschichtungen VB1, VB3, VB5, VB6, und VB7 mit einem Edding 400 Permanent-Marker beschrieben. Es wurde geprüft, ob die Tinte die Beschichtungen benetzt oder sich zu Tröpfchen zusammenzieht. Nach dem Trocknen der Tinte wurde versucht, diese mit einem trockenen Papiertuch zu entfernen.

Die Gesamtbewertung erfolgte mittels einer wie folgt dargestellten Skala von:

1 = Tinte benetzt Substrat nicht und bildet Tröpfchen, kann mit einem Papiertuch rückstandslos entfernt werden.
2 = Tinte benetzt Substrat teilweise und bildet Tröpfchen, kann mit einem Papiertuch rückstandslos entfernt werden.
3 = Tinte benetzt Substrat vollständig, kann mit einem Papiertuch rückstandslos entfernt werden.
4 = Tinte benetzt Substrat vollständig, kann mit einem Papiertuch nur teilweise entfernt werden.
5 = Tinte benetzt Substrat vollständig, kann nicht entfernt werden.

**Tabelle 8:** Ergebnisse des Edding-Tests

| | Edding-Test | | Edding-T est |
|---|---|---|---|
| B8 | 1 | VB1 | 4 |
| B9 | 1 | VB3 | 2 |
| B10 | 1 | VB5 | 4 |
| | | VB6 | 5 |
| | | VB7 | 3 |

Die erfindungsgemäßen Beschichtungen zeigen eine anti-graffiti-Eigenschaft auf.

3.4 Bestimmung der easy-to-clean Eigenschaft

Zur Ermittlung der easy-to-clean Eigenschaft eignet sich die Prüfung der erfindungsgemäßen Beschichtungen mit einer 2%igen Rußlösung in VE-Wasser. Die Rußlösung wurde aus 98 Teilen Vollentsalztem Wasser und 2 Teilen Spezialschwarz 4 von Orion Engineered Carbons hergestellt und diese Mischung für 5 Minuten bei Spritzgrenze unter dem Dispermaten dispergiert. Auf die beschichteten Aluminiumprüfbleche mit den Beschichtungen B8 bis B10 bzw. VB1, VB3, VB5, VB6, und VB7 wurde die Rußlösung mittels Flachpinsel mit Chinaborsten Größe 1" mit leichtem Druck in 5 Hüben aufgetragen. Die so vorbereiteten Bleche wurden bei 50°C für 1 h im Ofen getrocknet. Anschließend wurden die Bleche mit der langen Kante stark auf den Tisch geschlagen, um zu ermitteln, wieviel Schmutz abgeklopft werden kann. Der verbleibende Schmutz wurde mit einem trockenen Papiertuch von Torck abgewischt, danach der Glanzverlust und die Verfärbung visuell beurteilt.

Die Gesamtbewertung erfolgte mittels einer wie folgt dargestellten Skala von

1 = Nach Abklopfen verbleibt kein Ruß auf dem Blech. Es ist kein Glanzverlust oder Verfärbung sichtbar
2 = Nach Abklopfen verbleibt wenig Ruß auf dem Blech. Der Ruß kann rückstandlos mit dem Papiertuch entfernt werden. Es ist kein Glanzverlust oder Verfärbung sichtbar
3 = Nach Abklopfen verbleibt Ruß auf dem Blech. Der Ruß kann bis auf wenige Rückstände mit dem Papiertuch entfernt werden. Ein leichter Glanzverlust oder Verfärbung ist sichtbar
4 = Nach Abklopfen verbleibt Ruß auf dem Blech. Nach Reinigung mit dem Papiertuch sind deutliche Rußrückstände sichtbar. Ein starker Glanzverlust oder Verfärbung ist sichtbar.
5 = Der Ruß kann nicht abgeklopft und nicht mit dem Papiertuch abgewischt werden. Ein starker Glanzverlust oder Verfärbung ist sichtbar.

**Tabelle 9:** Ergebnisse easy-to-clean Tests

| | Ruß Anhaftung | | Ruß-Anhaftung |
|---|---|---|---|
| B8 | 1 | VB1 | 4 |
| B9 | 2 | VB3 | 3 |
| B10 | 1 | VB5 | 4 |
| | | VB6 | 5 |
| | | VB7 | 3 |

3.5 Bestimmung der anti-icing-Eigenschaft

Messmethode für Eishaftung

Die Anhaftung von Eis auf beschichteten Substraten wird quantitativ über die Kraft *F*, die erforderlich ist, um auf dem beschichteten Substrat anhaftendes Eis mit der Kontaktfläche A zwischen Eis und Substrat zu entfernen, bestimmt. Die Adhäsion $\tau$ berechnet sich nach der Formel $\tau = F/A$, wobei $\tau$ die Einheit der mechanischen Spannung (Pa) hat. Benötigt für diese Bestimmung werden ein Substrat, das die zu testende Beschichtung aufweist, eine Kühlung zur Herstellung und Beibehaltung des Eises aus Wasser, ein Behälter, der einzufrierendes Wasser und hernach das gefrorene Eis enthält, sowie eine Apparatur, die die Kraft *F* in Abhängigkeit der Zeit t ausübt und misst.

Fig. 1 zeigt ein Schnittbild durch die Adhäsionsstelle

Im vorliegenden Aufbau 1 wird die Beschichtung über eine Edelstahlplatte 13 mit den Abmaßen 100 x 40 x 15 $mm^3$ realisiert. Die Edelstahlplatte 13 verfügt über vier Bohrlöcher zur Befestigung der Edelstahlplatte 13 auf einem Kühlkörper 11. Die zu testende Beschichtung wird mit dem Fachmann bekannten Methoden auf der Edelstahlplatte 13 appliziert. Methoden können beispielsweise Sprühapplikation, Rakeln oder Rollen sein.
Die Kühlung wird über ein Peltierelement 12 mit einer Fläche von 40 x 40 $mm^2$ realisiert. Die beschichtete Edelstahlplatte 13 wird unter Nutzung der Bohrlöcher mit Schrauben und Mutter am o.g. Kühlkörper 11 befestigt, dergestalt dass das o.g. Peltierelement 12 zwischen Edelstahlplatte 13 und Kühlkörper 11 eingeklemmt wird. Das Peltierelement 12 wird derart verschaltet, dass die Kaltseite des Elementes 12 Kontakt mit der Edelstahlplatte 13 hat, und die Warmseite Kontakt mit dem Kühlkörper 11 hat. Der Wärmeübergang zwischen den beiden genannten Kontaktflächen wird mit einer Wärmeleitpaste hergestellt. Im vorliegenden Aufbau 1 handelt es sich bei dem Peltierelement 12 um ein Element des Typs QC-127-1.4-8.5MS der Fa. Quick-Ohm Küpper & Co. GmbH Wuppertal mit einer maximalen Betriebsspannung von 15,5 V, einer maximalen Betriebsstromstärke von 8,5 A und einer spezifizierten maximalen Leistung von 72 W.

Ein Behälter 14 wird über eine laborübliche Pipettenspitze aus transparentem Kunststoff realisiert. Die Pipettenspitze verfügt an der breiten Öffnung über einen Durchmesser von 13,5 mm. Die schmale Öffnung wird abgetrennt, so dass ein hohler Kegelstumpf von ca. 30 mm Länge verbleibt. Der nun entstandene Behälter wird mit der breiten Öffnung auf die Edelstahlplatte 13 gelegt und bis zu einem Füllstand von ca. 10 mm mit Wasser, bevorzugt vollentsalzt oder vollentsalzt und deionisiert, gefüllt. Sobald das Peltierelement 12 mit einer Stromquelle verbunden wird, kühlt die kalte Seite des Peltierelements 12 und vermittels der Wärmeleitpaste die Edelstahlplatte 13 und damit auch die zu testende Beschichtung auf eine Temperatur von ca. -10°C bis -20°C im Bereich der Pipettenspitze ab. Durch den Einfluss der Wärmepumpenfunktion des Peltierelements 12 kühlt das Wasser im Behälter 14 ab und geht in die Eisphase über. Das dabei entstehende Eis haftet an der zu testenden Beschichtung, es friert fest.

Die Apparatur zur Messung von *F*(*t*) (nicht dargestellt) wird über ein Universal-Materialprüfungsgerät Typ 1446 der Fa. Zwick GmbH & Co. KG Ulm realisiert. Die Messapparatur ist im vorliegenden Aufbau 1 mit einer Wägezelle (nicht dargestellt) bis zu einer maximalen Kraftaufnahme von 10 kN sowie einem verfahrbaren Balken versehen. Die Wägezelle wird am verfahrbaren Balken montiert und mit einem ebenen Metallkörper versehen.

Die mechanisch feste Verbindung aus Kühlkörper 11, sich in Betrieb befindlichem Peltierelement 12, Edelstahlplatte 13, Behälter 14 und Eis wird in den Verfahrweg des Balkens verbracht, dergestalt, dass vermittels des Metallkörpers an der Wägezelle das Eis und der Behälter parallel zur Oberfläche der Edelstahlplatte 13 und der zu testenden Beschichtung abgeschert werden (Kraftausübung gemäß 15). Dabei vermisst die Wägzelle den Kraftverlauf in Abhängigkeit der Zeit *F*(*t*).

Die über der Zeit maximal gemessene Kraft $F_{max}$ entspricht der Kraft, die benötigt wird, um das Eis parallel zur Oberfläche abzuscheren. Aus dem o.g. Durchmesser d des Behälters 14 errechnet sich die Kontaktfläche *A* zwischen

Eis und zu testender Beschichtung zu $A = (\frac{d}{2})^2\pi.$ Der quantitative Wert der Eisadhäsion berechnet sich gemäß Formel (II). Der Versuch wird mehrfach (vier- bis neunfach) wiederholt. Die Werte sind Mittelwerte aus fünf bis zehn Messwerten.

Ähnliche Aufbauten sind bekannt aus z.B. Meuler et al. ACS Applied Materials & Interfaces 2010 2 (11), 3100-3110 (DOI: 10.1021/am1006035) oder Raraty et al. Proc. R. Soc. Lond. A 1958 245 184-201 (DOI: 10.1098/rspa.1958.0076).

Zur Prüfung der anti-icing-Eigenschaft der Beschichtungen wurden die Beschichtungen B1, B3, B5 und B6 sowie die Vergleichsbeschichtungen VB1, VB2, VB3, VB4 und VB7, alle appliziert auf den vorher grundierten Edelstahlplatten mit den Abmaßen 100 x 40 x 15 mm, mit der oben beschriebenen Methode geprüft.

**Tabelle 10:** Ergebnisse des Tests zur Prüfung der Eis-Anhaftung

| | $\tau$[kPa] | | $\tau$ [kPa] |
|---|---|---|---|
| B1 | 47 | VB1 | 431 |
| B3 | 32 | VB2 | 321 |
| B5 | 18 | VB3 | 87 |
| B6 | 29 | VB4 | 118 |
| | | VB7 | 96 |

Mittels der oben beschriebenen Messmethode für Eishaftung wurde die Adhäsion der Beschichtungen gemäß Formel (II)

$$\tau = \frac{F}{A},$$

wobei die Adhäsion die Einheit der mechanischen Spannung (Pa) hat, ermittelt.

Ein Adhäsionswert von unter 50 kPa zeigt eine sehr gute anti-icing Eigenschaft auf.

3.6 Bestimmung der biofilmverhindernden Wirkung

Zur Prüfung der Zusammensetzungen hinsichtlich deren Wirksamkeit zur Verhinderung von Biofilmen unter Laborbedingungen wurden die unter Beispiel 1 hergestellten Beschichtungen B1 - B6 bzw. B1* - B6* sowie die Vergleichsbeschichtungen VB1 - VB6 bzw. VB1* - VB6* auf Glas-Objektträgern, analog wie oben beschrieben, appliziert.

Als Referenzorganismen für die Bakteriensuspension wurden Trinkwasserbakterien verwendet.

3.6.1 Herstellung der Bakteriensuspension-Stammlösung

Es handelte sich um die autochthone Mikroflora, die sich aus dem Trinkwasser unter Zugabe von Caso-Bouillon (3 g / l steriles Trinkwasser, Fa. Merck KGaA Millipore) innerhalb von 24 $\pm$ 4 Stunden bei 30°C bildete. Der Zelltiter dieser Bakteriensuspension-Stammlösung wurde mit Hilfe einer Thoma-Zählkammer bestimmt.

3.6.2 Herstellung der Bakteriensuspension-Arbeitslösung

Die Bakteriensuspension-Stammlösung wurde derart verdünnt, dass in 1,8 L Caso-Boullion (1,5 g / l steriles Trinkwasser) eine Zellzahl von 5 x $10^6$ Bakterien/ ml enthalten war.

Die derart hergestellte Bakteriensuspension-Arbeitslösung wurde in ein 2 L Becherglas gefüllt, das 24 beschichtete Glas-Objektträger (erfindungsgemäße Beschichtungen B1 - B6 bzw. B1* - B6*, Vergleichsbeschichtungen VB1 - VB6 bzw. VB1 * - VB6*) senkrecht in einem Stahlring fixiert enthielt. In der Mitte befand sich ein Magnetrührstab, der die Bakteriensuspension-Arbeitslösung durchmischte. Das Becherglas stand auf einer Magnetheizplatte, die so eingestellt war, dass die Bakteriensuspension-Arbeitslösung eine Temperatur von 30°C aufwies.

Die beschichteten Glas-Objektträger wurden nach 3 und 7 Tagen entnommen. Die lose adherierenden Bakterien wurden mit deionisiertem Wasser unter dem laufenden Wasserhahn abgewaschen. Die abgewaschenen beschichteten Glas-Objektträger wurden anschließend hinsichtlich ihrer Biofilmbildung untersucht. Die visuelle Bewertung erfolgte im Rasterelektronenmikroskop (Hitachi Tabletopmikroskop TM4000Plus) bei 200 und 2000facher Vergrößerung.

Die Gesamtbewertung erfolgte mittels einer wie folgt dargestellten Skala von

0 = kein Biofilm
1 = minimaler Biofilm
2 = leichter Biofilm
3 = mittelstarker Biofilm
4 = starker Biofilm

**Tabelle 6:** Ergebnisse der biofilmverhindernden Wirkung

| Beschichtung | 0 Tage | 3 Tage | 7 Tage |
|---|---|---|---|
| B1 | 0 | 0 | |
| B1* | | | 1 |
| B2 | 0 | 1 | |
| B2* | | | 2 |
| B3 | 0 | 1 | |
| B3* | | | 1 |
| B4 | 0 | 1 | |
| B4* | | | 2 |
| B5 | 0 | 1 | |
| B5* | | | 2 |
| B6 | 0 | 0 | |
| B6* | | | 1 |
| VB1 | 0 | 3 | |
| VB1* | | | 4 |
| VB2 | 0 | 3 | |
| VB2* | | | 4 |
| VB3 | 0 | 2 | |
| VB3* | | | 3 |
| VB4 | 0 | 1 | |
| VB4* | | | 3 |
| VB5 | 0 | 3 | |
| VB5* | | | 4 |
| VB6 | 0 | 3 | |
| VB6* | | | 4 |

Die beschichteten Glas-Objektträger mit der erfindungsgemäßen Zusammensetzungen B1 - B6 bzw. B1* - B6* zeigten einen leichten Biofilm nach 3 bzw. 7 Tagen auf.

**Patentansprüche**

1. Härtbare Zusammensetzung zur Herstellung von Beschichtungen mit anti-adhäsiver Eigenschaft enthaltend mindestens ein filmbildendes Polymer und mindestens ein organomodifiziertes, verzweigtes Siloxan der Formel (I) oder Mischungen davon:

$M_a\ M'_{a1}\ D_b\ D'_{b1}\ T_c$ Qd  Formel (I)

mit

M = $(R^1{}_3SiO_{1/2})$
M' = $(R^2R^1{}_2SiO_{1/2})$
D = $(R^1{}_2SiO_{2/2})$
D' = $(R^2R^1SiO_{2/2})$
T = $(R^3SiO_{3/2})$
Q = $(SiO_{4/2})$
a = 0 bis 30, bevorzugt 0 bis 12
a1 = 0 bis 30, bevorzugt 0 bis 12, mit der Maßgabe, dass a + a1 > 2,
b = 10 bis 1000, bevorzugt 30 bis 900, insbesondere 50 bis 800;
b1 = 0 bis 30, bevorzugt 1 bis 15, mit der Maßgabe, dass a1 + b1 > 0,
c = 0 bis 30, bevorzugt 0 bis 20,
d = 0 bis 15, bevorzugt 0 bis 12, mit der Maßgabe dass, c + d >= 1,
$R^1$ = unabhängig voneinander gleiche oder verschiedene lineare oder verzweigte, gegebenenfalls aromatische Kohlenwasserstoffreste mit 1 bis 30 Kohlenstoffatomen, bevorzugt Methyl, Ethyl, Phenyl, Dodecyl oder Hexadecyl insbesondere Methyl,
$R^2$ = unabhängig voneinander gleiche oder verschiedene organische Polyether-, Hydroxy-, Amin-, Carboxy-, Alkoxy, Epoxy-, Alkylalkoxysilylalkyl- oder Alkoxysilylalkyl-Reste,
$R^3$ = R1 oder R2, bevorzugt Methyl-, Phenyl- oder Alkoxyreste, insbesondere Methylreste.

**2.** Härtbare Zusammensetzung nach Anspruch 1, **dadurch gekennzeichnet, dass** die Siloxane der Formel (I) gleiche oder verschiedene Reste $R^2$, ausgewählt aus der Gruppe

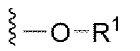
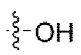
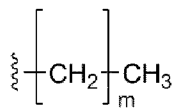
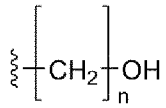

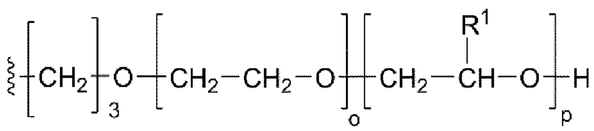
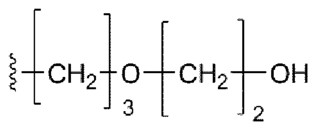

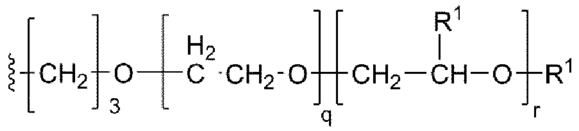
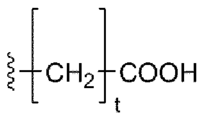

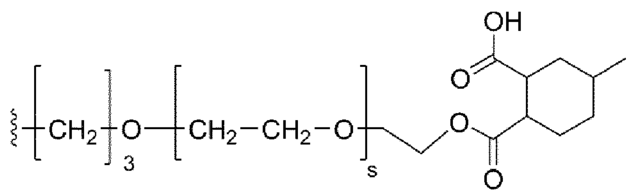
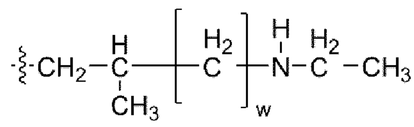

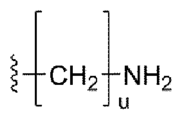
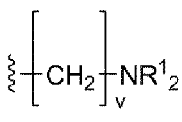
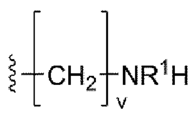
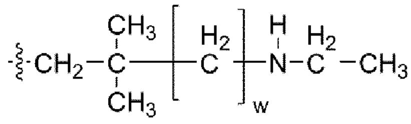

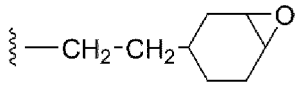

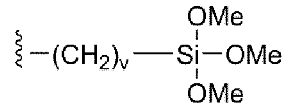

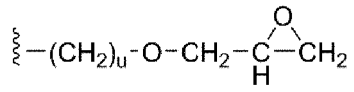

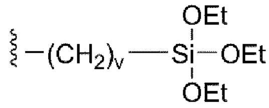

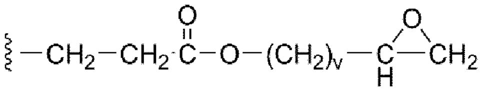

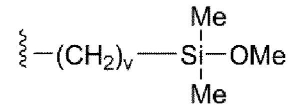

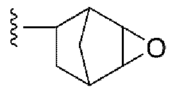

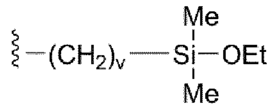

mit

m = 6 bis 20, bevorzugt 8 bis 18,
n = 2 bis 18, bevorzugt 4 bis 8,
o = 0 bis 30, bevorzugt 2 bis 20, insbesondere 5 bis 15,
p = 0 bis 30, bevorzugt 0 bis 10,
q = 0 bis 30, bevorzugt 2 bis 20, insbesondere 5 bis 15,
r = 0 bis 30, bevorzugt 0 bis 10,
s = 0 bis 10, bevorzugt 1 bis 5,
t = 1 bis 20, bevorzugt 1 bis 10,
u = 1 bis 10, bevorzugt 2 bis 4,
v = 1 bis 10, bevorzugt 2 bis 5,
w = 1 bis 6, bevorzugt 1 bis 3

aufweisen.

3. Härtbare Zusammensetzung nach Anspruch 1 oder 2, **dadurch gekennzeichnet, dass** es sich bei den Siloxanen der Formel (I) um organomodifizierte, im Siloxanteil einfach verzweigte oder mehrfachverzweigte Siloxane handelt.

4. Härtbare Zusammensetzung nach Anspruch 3,**dadurch gekennzeichnet, dass** die Siloxane der Formel (I) endständige und/oder seitenständige organische Reste, ausgewählt aus OH-Gruppen tragenden organischen Resten, Carboxylat-Gruppen, Allylglycidylethergruppen, Hydroxyethylpropylgruppen, Alkoxysilylalkylgruppen, Dodecylgruppen oder Aminoalkylgruppen, aufweisen.

5. Härtbare Zusammensetzung nach Anspruch 3, **dadurch gekennzeichnet, dass** der mittlere Verzweigungsgrad K der Siloxane gemäß Formel (I) wie in der Beschreibung definiert ist und größer als 1, bevorzugt größer als 1,25 ist.

6. Härtbare Zusammensetzung nach Anspruch 3, **dadurch gekennzeichnet, dass** die Siloxane der Formel (I) eine mittlere Anzahl direkt aufeinander folgender D-Einheiten F1 = (D + D')/(1+T*2+Q*3) von mindestens 5, bevorzugt mindestens 10 aufweisen, wobei F1 durch die in der Beschreibung offenbarte Methode ermittelt wird.

7. Härtbare Zusammensetzung nach Anspruch 3, **dadurch gekennzeichnet, dass** die Siloxane der Formel (I) eine Viskosität, gemessen nach DIN 53015, von 50 - 2000 mPa s (25°C), vorzugsweise von 100 - 1500 mPa s (25°C), besonders bevorzugt von 150 - 1000 mPa s (25°C) aufweisen.

8. Härtbare Zusammensetzung nach Anspruch 1, **dadurch gekennzeichnet, dass** das filmbildende Polymer funktionelle Gruppen enthält, welche mit einem isocyanathaltigen Härter, einem aminhaltigen Härter oder mit einem Katalysator reaktiv sind.

**9.** Härtbare Zusammensetzung nach Anspruch 8, **dadurch gekennzeichnet, dass** das filmbildende Polymer aus der Gruppe der hydroxyfunktionellen Acrylatpolymere, Polyesterpolymere, Polyurethanpolymere und/oder Polyetherpolymere, hydroxyfunktionellen Polysiloxane oder hydroxyfunktionellen fluorhaltigen Polymere, Polyoxypropylenamine, aminofunktionellen Acrylat-Polymere oder Polyesterpolymere sowie Polycarbamate ausgewählt ist, das mit einem isocyanathaltigen Härter reagiert.

**10.** Härtbare Zusammensetzung nach Anspruch 8, **dadurch gekennzeichnet, dass** das filmbildende Polymer aus der Gruppe der epoxyfunktionellen Silan bzw. Siloxan, aromatischen oder aliphatischen Glycidylether oder deren Kondensate oder Mischungen daraus ausgewählt ist, das mit einem aminhaltigen Härter reagiert.

**11.** Härtbare Zusammensetzung nach Anspruch 8, **dadurch gekennzeichnet, dass** das filmbildende Polymer ein filmformendes alkoxysilylgruppenhaltiges Polymer ist, das durch den Mechanismus der Hydrolyse-Kondensation aushärtet, optional in Kombination mit mindestens einem Katalysator.

**12.** Härtbare Zusammensetzung nach Anspruch 1, **dadurch gekennzeichnet, dass** die Siloxane gemäß Formel (I) in Konzentrationen von 0,1 Gew.- % bis 40 Gew.- %, bevorzugt 1 Gew.- % bis 35 Gew.- % und besonders bevorzugt 2 Gew.- % bis 20 Gew.-%, bezogen auf die härtbare Zusammensetzung, eingesetzt werden.

**13.** Verwendung der härtbaren Zusammensetzung nach einem der vorgenannten Ansprüche zur Herstellung von Beschichtungen mit anti-adhäsiv-Eigenschaften, anti-soiling-Eigenschaften, anti-graffiti-Eigenschaften, anti-icing Eigenschaften oder Antifouling Eigenschaften.

**14.** Verwendung von organomodifizierten, verzweigten Siloxanen der Formel (I) oder Mischungen davon als universelles anti-adhäsiv Additiv, vorzugsweise als Antifouling Additiv, anti-soiling Additiv, anti-icing Additiv oder anti-graffiti Additiv.

**15.** Verfahren zur Bildung einer anti-adhäsiven Beschichtung auf einem Substrat, umfassend das Aufbringen einer härtbaren filmbildenden Zusammensetzung auf das Substrat, umfassend:

(a) mindestens ein filmbildendes Polymer, das funktionelle Gruppen enthält, welche mit einem isocyanathaltigen Härter, mit einem aminhaltigen Härter oder mit einem Katalysator reaktiv sind,
(b) mindestens ein organomodifiziertes, verzweigtes Siloxan gemäß der Formel (I) oder Mischungen davon und
(c) einen Härter, enthaltend isocyanatfunktionelle oder aminofunktionelle Gruppen, oder einen Katalysator.

**16.** Verfahren nach Anspruch 15, **dadurch gekennzeichnet, dass** das Siloxan (b) ein zahlenmittleres Molekulargewicht von 2.500 - 70.000 g/Mol, bevorzugt 5.000 - 50.000 g/mol, besonders bevorzugt 7.000 - 35.000 g/mol aufweist, dass wie in der Beschreibung offenbart ermittelt wird.

**17.** Verfahren nach Anspruch 15, wobei das Siloxan (b) in der härtbaren filmbildenden Zusammensetzung in einer Menge von 0,1 Gew.- % bis 40 Gew.- %, bevorzugt 1 Gew.-% bis 35 Gew.- % und besonders bevorzugt 2 Gew.- % bis 20 Gew.- %, vorhanden ist.

**18.** Verfahren nach Anspruch 15, wobei die härtbare filmbildende Zusammensetzung bei Umgebungstemperatur gehärtet wird.

**19.** Verfahren nach Anspruch 15, wobei das Substrat Metall, Beton, Holz, Kunststoff und/oder Glasfaser und/oder Kohlenstofffaserverbundwerkstoff enthält.

**20.** Verfahren nach Anspruch 19, wobei das Substrat einen Schiffsrumpf, unterwasserliegende Strukturen, und/oder Ölbohrplattformen umfasst.

**21.** Verfahren nach Anspruch 15, wobei eine Grundier- und/oder filmbildende Decklackzusammensetzung auf das Substrat vor der Auftragung der härtbaren filmbildenden Zusammensetzung aufgetragen wird.

**22.** Beschichtungen mit anti-adhäsiv-Eigenschaften, anti-soiling-Eigenschaften, anti-graffiti Eigenschaften, anti-icing Eigenschaften oder Antifouling Eigenschaften enthaltend mindestens ein organomodifiziertes, verzweigtes Siloxan gemäß der Formel (I).

**23.** Universelles anti-adhäsiv Additiv, vorzugsweise ein Antifouling Additiv, ein anti-soiling Additiv, ein anti-icing Additiv oder ein anti-graffiti Additiv enthaltend mindestens ein organomodifiziertes, verzweigtes Siloxan gemäß der Formel (I).

## Claims

**1.** Curable composition for producing coatings having an anti-adhesive property containing at least one film-forming polymer and at least one organo-modified, branched siloxane of formula (I) or mixtures thereof:

$$M_a\, M'_{a1}\, D_b\, D'_{b1}\, T_c\, Q_d \qquad \text{Formula (I)}$$

where

$M = (R^1{}_3SiO_{1/2})$
$M' = (R^2R^1{}_2SiO_{1/2})$
$D = (R^1{}_2SiO_{2/2})$
$D' = (R^2R^1SiO_{2/2})$
$T = (R^3SiO_{3/2})$
$Q = (SiO_{4/2})$
a = 0 to 30, preferably 0 to 12
a1 = 0 to 30, preferably 0 to 12, with the proviso that a + a1 > 2,
b = 10 to 1000, preferably 30 to 900, in particular 50 to 800;
b1 = 0 to 30, preferably 1 to 15, with the proviso that a1 + b1 > 0,
c = 0 to 30, preferably 0 to 20,
d = 0 to 15, preferably 0 to 12, with the proviso that c + d >= 1,
$R^1$ = independently of one another identical or different linear or branched, optionally aromatic hydrocarbon radicals having 1 to 30 carbon atoms, preferably methyl, ethyl, phenyl, dodecyl or hexadecyl, in particular methyl,
$R^2$ = independently of one another identical or different organic polyether, hydroxyl, amine, carboxyl, alkoxy, epoxy, alkylalkoxysilylalkyl or alkoxysilylalkyl radicals,
$R^3$ = R1 or R2, preferably methyl, phenyl or alkoxy radicals, in particular methyl radicals.

**2.** Curable composition according to Claim 1, **characterized in that** the siloxanes of formula (I) comprise identical or different radicals $R^2$ selected from the group

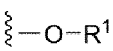 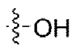 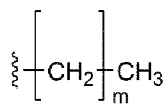 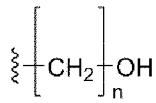

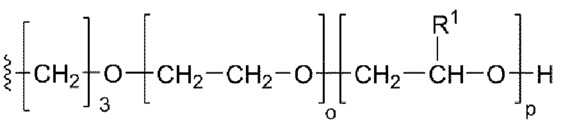 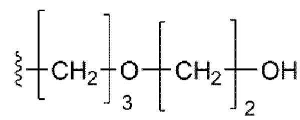

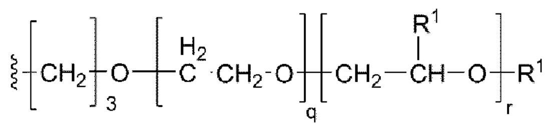 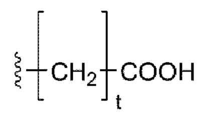

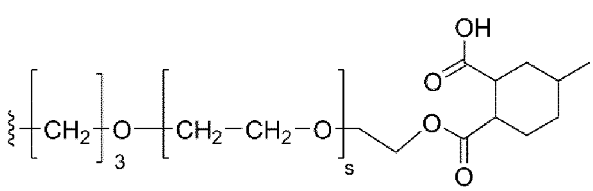 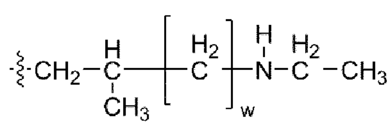

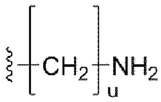 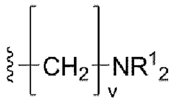 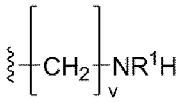 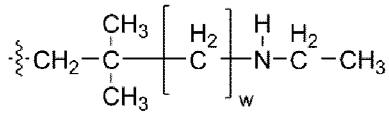

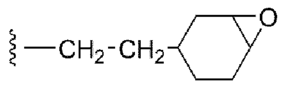 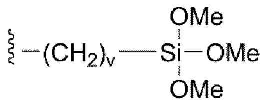

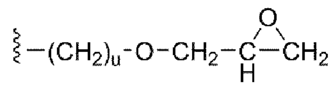 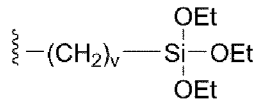

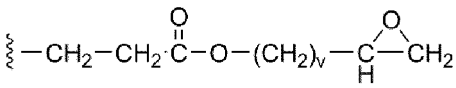 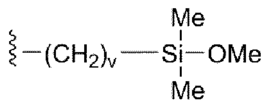

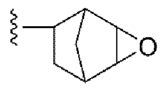 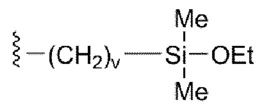

where

m = 6 to 20, preferably 8 to 18,
n = 2 to 18, preferably 4 to 8,
o = 0 to 30, preferably 2 to 20, in particular 5 to 15,
p = 0 to 30, preferably 0 to 10,
q = 0 to 30, preferably 2 to 20, in particular 5 to 15,
r = 0 to 30, preferably 0 to 10,
s = 0 to 10, preferably 1 to 5,
t = 1 to 20, preferably 1 to 10,
u = 1 to 10, preferably 2 to 4,
v = 1 to 10, preferably 2 to 5,
w = 1 to 6, preferably 1 to 3.

3. Curable composition according to Claim 1 or 2, **characterized in that** the siloxanes of formula (I) are organo-modified siloxanes singly or multiply branched in the siloxane part.

4. Curable composition according to Claim 3, **characterized in that** the siloxanes of formula (I) have terminal and/or lateral organic radicals selected from OH-bearing organic radicals, carboxylate groups, allyl glycidyl ether groups, hydroxyethylpropyl groups, alkoxysilylalkyl groups, dodecyl groups or aminoalkyl groups.

5. Curable composition according to Claim 3, **characterized in that** the average degree of branching K of the siloxanes according to formula (I) is as defined in the description and is greater than 1, preferably greater than 1.25.

6. Curable composition according to Claim 3, **characterized in that** the siloxanes of formula (I) have an average number of directly successive D units F1 = (D + D')/(1+T*2+Q*3) of at least 5, preferably at least 10, wherein F1 is determined by the method disclosed in the description.

7. Curable composition according to Claim 3, **characterized in that** the siloxanes of formula (I) have a viscosity measured according to DIN 53015 of 50 - 2000 mPa s (25°C), preferably of 100 - 1500 mPa s (25°C), particularly preferably of 150 - 1000 mPa s (25°C) .

8. Curable composition according to Claim 1, **characterized in that** the film-forming polymer contains functional groups

reactive with an isocyanate-containing curing agent, an amine-containing curing agent or with a catalyst.

**9.** Curable composition according to Claim 8, **characterized in that** the film-forming polymer is selected from the group of hydroxyl-functional acrylate polymers, polyester polymers, polyurethane polymers and/or polyether polymers, hydroxyl-functional polysiloxanes or hydroxyl-functional fluorine-containing polymers, polyoxypropyleneamines, amino-functional acrylate polymers or polyester polymers and polycarbamates reactive with an isocyanate-containing curing agent.

**10.** Curable composition according to Claim 8, **characterized in that** the film-forming polymer is selected from the group of epoxy-functional silane or siloxane, aromatic or aliphatic glycidyl ethers or condensates thereof or mixtures thereof reactive with an amine-containing curing agent.

**11.** Curable composition according to Claim 8, **characterized in that** the film-forming polymer is a film-forming alkoxysilyl-containing polymer which cures by the mechanism of hydrolysis condensation, optionally in combination with at least one catalyst.

**12.** Curable composition according to Claim 1, **characterized in that** the siloxanes of formula (I) are employed in concentrations of 0.1% by weight to 40% by weight, preferably 1% by weight to 35% by weight and particularly preferably 2% by weight to 20% by weight based on the curable composition.

**13.** Use of the curable composition according to any of the preceding claims for producing coatings having anti-adhesive properties, anti-soiling properties, anti-graffiti properties, anti-icing properties or anti-fouling properties.

**14.** Use of organo-modified, branched siloxanes of formula (I) or mixtures thereof as a universal anti-adhesive additive, preferably as an anti-fouling additive, anti-soiling additive, anti-icing additive or anti-graffiti additive.

**15.** Process for forming an anti-adhesive coating on a substrate comprising applying a curable film-forming composition atop the substrate, comprising:

(a) at least one film-forming polymer containing functional groups reactive with an isocyanate-containing curing agent, with an amine-containing curing agent or with a catalyst,
(b) at least one organo-modified, branched siloxane according to formula (I) or mixtures thereof and
(c) a curing agent containing isocyanate-functional or amino-functional groups or a catalyst.

**16.** Process according to Claim 15, **characterized in that** the siloxane (b) has a number-average molecular weight of 2500 - 70 000 g/mol, preferably 5000 - 50 000 g/mol, particularly preferably 7000 - 35 000 g/mol, that is determined as disclosed in the description.

**17.** Process according to Claim 15, wherein the siloxane (b) is present in the curable film-forming composition in an amount from 0.1% by weight to 40% by weight, preferably 1% by weight to 35% by weight, and particularly preferably 2% by weight to 20% by weight.

**18.** Process according to Claim 15, wherein the curable film-forming composition is cured at ambient temperature.

**19.** Process according to Claim 15, wherein the substrate contains metal, concrete, wood, plastic and/or glass fibre and/or carbon fibre composite.

**20.** Process according to Claim 19, wherein the substrate comprises a ship's hull, underwater structures and/or oil drilling platforms.

**21.** Process according to Claim 15, wherein an undercoat and/or film-forming top coat composition is applied atop the substrate before application of the curable film-forming composition.

**22.** Coatings having anti-adhesive properties, anti-soiling properties, anti-graffiti properties, anti-icing properties or anti-fouling properties, containing at least one organo-modified, branched siloxane of formula (I).

**23.** Universal anti-adhesive additive, preferably an anti-fouling additive, an anti-soiling additive, an anti-icing additive or an anti-graffiti additive containing at least one organo-modified, branched siloxane of formula (I).

## Revendications

1. Composition durcissable pour la préparation de revêtements dotés d'une propriété antiadhésive contenant au moins un polymère filmogène et au moins un siloxane ramifié, organomodifié de formule (I) ou des mélanges correspondants :

$$M_a\, M'_{a1}\, D_b\, D'_{b1}\, T_c\, Q_d \qquad \text{formule (I)}$$

avec

$M = (R^1{}_3SiO_{1/2})$
$M' = (R^2R^1{}_2SiO_{1/2})$
$D = (R^1{}_2SiO_{2/2})$
$D' = (R^2R^1SiO_{2/2})$
$T = (R^3SiO_{3/2})$
$Q = (SiO_{4/2})$
a = 0 à 30, préférablement 0 à 12,
a1 = 0 à 30, préférablement 0 à 12, à la condition que a + a1 > 2,
b = 10 à 1 000, préférablement 30 à 900, en particulier 50 à 800 ;
b1 = 0 à 30, préférablement 1 à 15, à la condition que a1 + b1 > 0,
c = 0 à 30, préférablement 0 à 20,
d = 0 à 15, préférablement 0 à 12, à la condition que c + d ≥ 1,
$R^1$ = indépendamment les uns des autres, des radicaux hydrocarbonés identiques ou différents, linéaires ou ramifiés, éventuellement aromatiques comportant 1 à 30 atomes de carbone, préférablement méthyle, éthyle, phényle, dodécyle ou hexadécyle, en particulier méthyle,
$R^2$ = indépendamment les uns des autres, des radicaux organiques identiques ou différents de type polyéther, hydroxy, amino, carboxy, alcoxy, époxy, alkylalcoxysilylalkyle ou alcoxysilylalkyle,
$R^3$ = $R^1$ ou $R^2$, préférablement des radicaux méthyle, phényle ou alcoxy, en particulier des radicaux méthyle.

2. Composition durcissable selon la revendication 1, **caractérisée en ce que** les siloxanes de formule (I) présentent des radicaux $R^2$ identiques ou différents, choisis dans le groupe

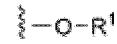 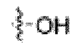 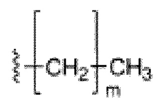 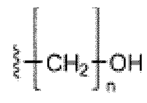

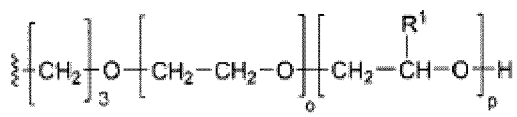 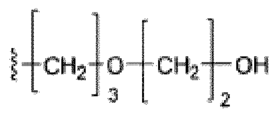

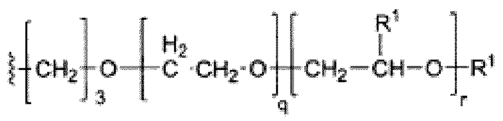 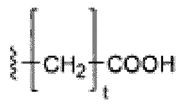

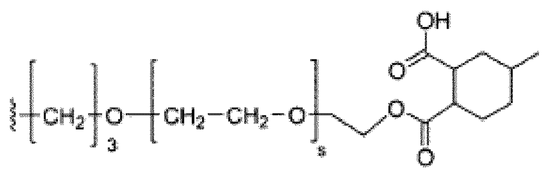 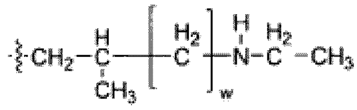

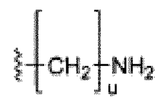 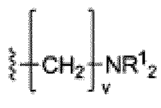 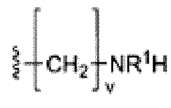 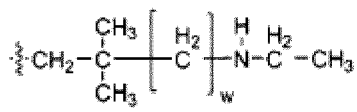

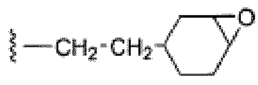

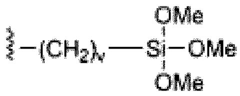

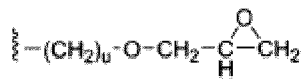

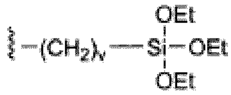

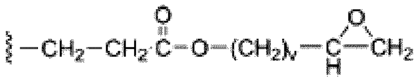

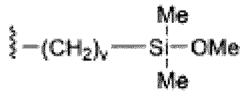

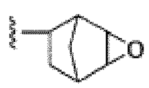

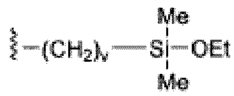

avec

m = 6 à 20, préférablement 8 à 18,
n = 2 à 18, préférablement 4 à 8,
o = 0 à 30, préférablement 2 à 20, en particulier 5 à 15,
p = 0 à 30, préférablement 0 à 10,
q = 0 à 30, préférablement 2 à 20, en particulier 5 à 15,
r = 0 à 30, préférablement 0 à 10,
s = 0 à 10, préférablement 1 à 5,
t = 1 à 20, préférablement 1 à 10,
u = 1 à 10, préférablement 2 à 4,
v = 1 à 10, préférablement 2 à 5,
w = 1 à 6, préférablement 1 à 3.

3. Composition durcissable selon la revendication 1 ou 2, **caractérisée en ce que** les siloxanes de formule (I) sont des siloxanes organomodifiés, ramifiés une fois ou ramifiés plusieurs fois dans la partie siloxane.

4. Composition durcissable selon la revendication 3, **caractérisée en ce que** les siloxanes de formule (I) présentent des radicaux organiques terminaux et/ou latéraux, choisis parmi des radicaux organiques portant des groupes OH, parmi des groupes carboxylate, des groupes allylglycidyléther, des groupes hydroxyéthylpropyle, des groupes alcoxysilylalkyle, des groupes dodécyle et des groupes aminoalkyle.

5. Composition durcissable selon la revendication 3, **caractérisée en ce que** le degré moyen de ramification K des siloxanes selon la formule (I), est comme défini dans la description et est supérieur à 1, préférablement supérieur à 1,25.

6. Composition durcissable selon la revendication 3, **caractérisée en ce que** les siloxanes de formule (I) présentent un nombre moyen de motifs D directement consécutifs **F1=(D + D')/(1+T*2+Q*3)** d'au moins 5, préférablement d'au moins 10, F1 étant déterminée par le procédé décrit dans la description.

7. Composition durcissable selon la revendication 3, **caractérisée en ce que** les siloxanes de formule (I) présentent une viscosité, mesurée selon la norme DIN 53015, de 50 à 2 000 mPa.s (25 °C), de préférence de 100 à 1 500 mPa.s (25 °C), particulièrement préférablement de 150 à 1 000 mPa.s (25 °C).

8. Composition durcissable selon la revendication 1, **caractérisée en ce que** le polymère filmogène contient des groupes fonctionnels qui sont réactifs avec un durcisseur contenant un isocyanate, un durcisseur contenant une amine ou avec un catalyseur.

**9.** Composition durcissable selon la revendication 8, **caractérisée en ce que** le polymère filmogène est choisi dans le groupe des polymères d'acrylate, des polymères de type polyester, des polymères de type polyuréthane et/ou des polymères de type polyéther fonctionnalisés par hydroxy, des polysiloxanes fonctionnalisés par hydroxy ou des polymères fonctionnalisés par hydroxy contenant du fluor, des polyoxypropylènamines, des polymères d'acrylate ou des polymères de type polyester fonctionnalisés par amino ainsi que des polycarbamates, qui réagit avec un durcisseur contenant un isocyanate.

**10.** Composition durcissable selon la revendication 8, **caractérisée en ce que** le polymère filmogène est choisi dans le groupe des silanes ou siloxanes fonctionnalisés par époxy, des éthers de glycidyle aromatiques ou aliphatiques ou leur condensats ou des mélanges de ceux-ci, qui réagit avec un durcisseur contenant une amine.

**11.** Composition durcissable selon la revendication 8, **caractérisée en ce que** le polymère filmogène est un polymère filmogène contenant un groupe alcoxysilyle, qui durcit par le mécanisme d'hydrolyse-condensation, éventuellement en combinaison avec au moins un catalyseur.

**12.** Composition durcissable selon la revendication 1, **caractérisée en ce que** les siloxanes selon la formule (I) sont utilisés en des concentrations de 0,1 % en poids à 40 % en poids, préférablement 1 % en poids à 35 % en poids et particulièrement préférablement 2 % en poids à 20 % en poids, par rapport à la composition durcissable.

**13.** Utilisation de la composition durcissable selon l'une quelconque des revendications précédentes pour la préparation de revêtements dotés de propriétés antiadhésives, de propriétés anti-encrassement, de propriétés anti-graffiti, de propriétés antigivre ou de propriétés antisalissures.

**14.** Utilisation de siloxanes organomodifiés, ramifiés, de formule (I) ou de mélanges correspondants en tant qu'additif antiadhésif universel, de préférence en tant qu'additif antisalissures, additif anti-encrassement, additif antigivre ou additif anti-graffiti.

**15.** Procédé pour la formation d'un revêtement antiadhésif sur un substrat, comprenant le dépôt d'une composition durcissable filmogène sur le substrat, comprenant :

(a) au moins un polymère filmogène, qui contient des groupes fonctionnels qui sont réactifs avec un durcisseur contenant un isocyanate, avec un durcisseur contenant une amine ou avec un catalyseur,
(b) au moins un siloxane organomodifié, ramifié, selon la formule (I) ou des mélanges correspondants et
(c) un durcisseur, contenant des groupes fonctionnalisés par isocyanate ou fonctionnalisés par amino, ou un catalyseur.

**16.** Procédé selon la revendication 15, **caractérisé en ce que** le siloxane (b) présente un poids moléculaire moyen en nombre de 2 500 à 70 000 g/mole, préférablement 5 000 à 50 000 g/mole, particulièrement préférablement 7 000 à 35 000 g/mole, qui est déterminé comme décrit dans la description.

**17.** Procédé selon la revendication 15, le siloxane (b) étant présent dans la composition durcissable filmogène en une quantité de 0,1 % en poids à 40 % en poids, préférablement 1 % en poids à 35 % en poids et particulièrement préférablement 2 % en poids à 20 % en poids.

**18.** Procédé selon la revendication 15, la composition durcissable filmogène étant durcie à température ambiante.

**19.** Procédé selon la revendication 15, le substrat contenant du métal, du béton, du bois, du plastique et/ou des fibres de verre et/ou un matériau composite de fibres de carbone.

**20.** Procédé selon la revendication 19, le substrat comprenant une coque de bateau, des structures sous-marines, ou des plates-formes de forage pétrolières.

**21.** Procédé selon la revendication 15, une composition de revêtement de finition d'apprêt et/ou filmogène étant déposée sur le substrat avant le dépôt de la composition durcissable filmogène.

**22.** Revêtements dotés de propriétés antiadhésives ou de propriétés anti-encrassement, de propriétés anti-graffiti, de propriétés antigivre ou de propriétés antisalissures contenant au moins un siloxane organomodifié, ramifié, selon la formule (I) .

**23.** Additif antiadhésif universel, de préférence additif antisalissures, additif anti-encrassement, additif antigivre ou additif anti-graffiti contenant au moins un siloxane organomodifié, ramifié, selon la formule (I).

Fig. 1

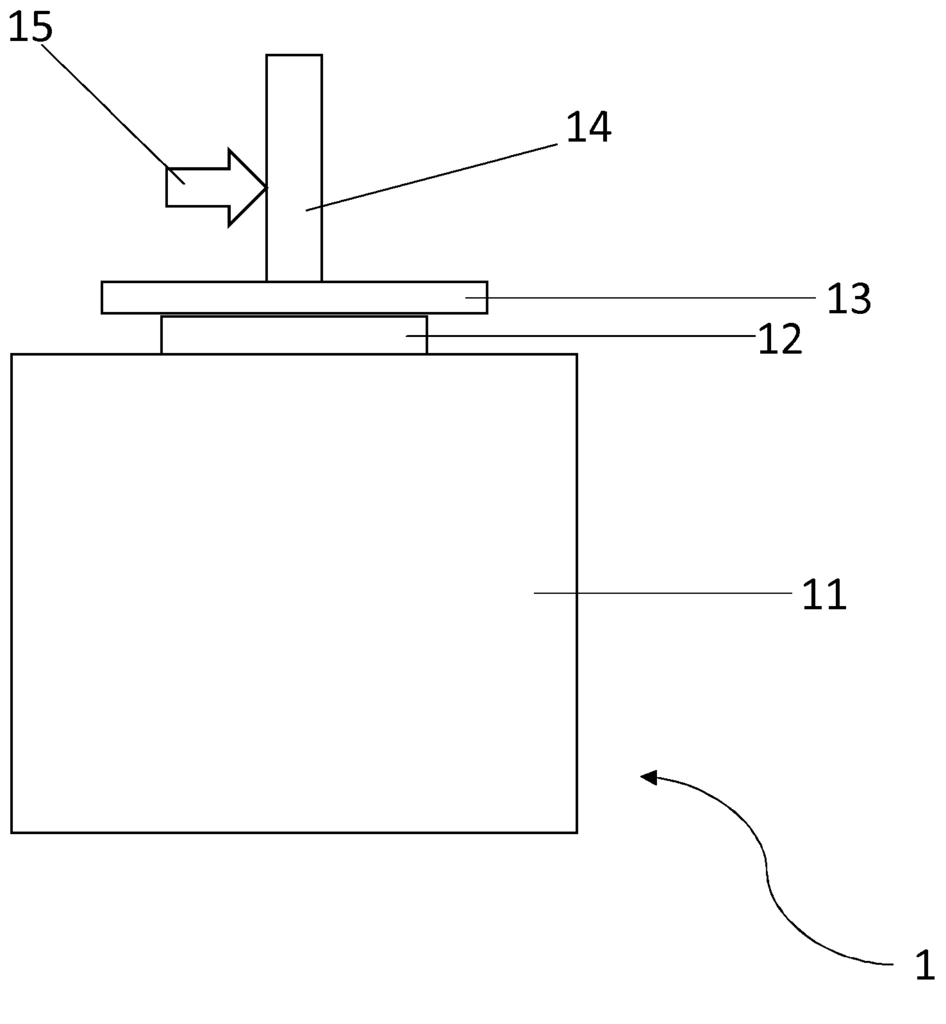

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20060281861 A1
- WO 2012100099 A2
- EP 0646630 A
- EP 0802243 A
- US 20080213599 A
- WO 2009025924 A
- EP 2159248 A
- EP 2159248 B1
- EP 2176319 B1
- WO 2011088937 A1
- WO 2005100482 A


### In der Beschreibung aufgeführte Nicht-Patentliteratur


- Thieme Römpp Online. Georg Thieme Verlag, 2008
- **MEULER et al.** *ACS Applied Materials & Interfaces,* 2010, vol. 2 (11), 3100-3110
- **RARATY et al.** *Proc. R. Soc. Lond,* 1958, vol. 245, 184-201